# EUROPEAN PATENT SPECIFICATION

(11) **EP 3 383 018 B1**
(45) Date of publication and mention of the grant of the patent: **08.09.2021**
(21) Application number: 18162129.3
(22) Date of filing: 15.03.2018
(51) Int. Cl.: H04N 1/60

(54) **INFORMATION PROCESSING SYSTEM, PRINT MEDIUM, AND INFORMATION PROCESSING DEVICE**
INFORMATIONSVERARBEITUNGSSYSTEM, DRUCKMEDIUM UND INFORMATIONSVERARBEITUNGSVORRICHTUNG
SYSTÈME DE TRAITEMENT D'INFORMATIONS, SUPPORT D'IMPRESSION ET DISPOSITIF DE TRAITEMENT D'INFORMATIONS

(30) Priority: 30.03.2017 JP 2017068253
(43) Date of publication of application: 03.10.2018
(73) Proprietor: Seiko Epson Corporation, Tokyo 160-8801 (JP)
(72) Inventor: IWAMOTO, Kohei, Suwa-shi, Nagano 392-8502 (JP); UWAI, Hikonosuke, Suwa-shi, Nagano 392-8502 (JP); MORIYAMA, Satoshi, Suwa-shi, Nagano 392-8502 (JP)
(74) Representative: Miller Sturt Kenyon

(56) References cited:
- US-A- 5 774 146
- US-A1- 2006 221 365
- US-A1- 2007 008 594
- US-A1- 2014 285 856

## Description

### BACKGROUND

### 1. Technical Field

The invention relates to an information processing method and information processing device.

### 2. Related Art

Printing systems in which a printer prints on print media based on print data generated using a color profile (ICC profile) are known from the literature. See, for example, JP-A-2010-102398.

For a printer to print on print media with high quality, the printer must print according to the color characteristics of the print medium. This requires enabling easily determining the color characteristics of the print medium, and then enabling the printer to print according to the color characteristics of the print medium.

US 2006/221365 A1 discloses an output data creating device that creates output data to be used by an image formation device based on input data representing image to be formed. The data creating device includes an output condition obtaining unit that obtains output condition regarding image formation on the recording medium, a table storage unit that stores a plurality of color conversion tables meeting a plurality of predetermined conditions used for converting the input data to the output data, a combined color converting unit that converts the input data based on the output condition and a plurality of color conversion tables stored in the table storage unit when there is not a color conversion table that meets the output condition obtained by the output condition obtaining unit in the table storage unit, and an output data creating unit that creates the output data based on the input data that has been color-converted.

US 5,774,146 A discloses a paper kind sensor that discriminates a kind of a paper to be printed by the print section. Receiving the paper kind information from the sensor, the CPU selects a color-conversion table out of the plurality of color-conversion tables stored in the ROM. The selected color-conversion table corresponds to the kind of the presently-used paper. The CPU then performs a color-conversion operation on print data with using the selected color-conversion table. Thus color-converted print data is used in printing operation. A user will not need to consider a kind of paper to be printed, and therefore will not need to control the host computer to correct for print information before supplying the print information to the printer. It becomes possible to reduce a burden loaded on the user.

US 2007/008594 A1 discloses a method of optimizing printer output quality, which includes identifying media in at least one media tray, querying a media database for a record corresponding to the identified media, extracting data from a record of identified media, adjusting printer operation based upon the extracted data, and printing on the identified media, wherein the printer operation is adjusted on a page-by-page basis within a single print job. Typical parameters which are adjusted during the print job are the transfer voltages and the volume of toner deposition. In another embodiment, media is assigned to groups based upon its color and print parameters are adjusted as different colors of media are used.

US 2014/285856 A1 discloses a method that allows an end user to calibrate a color reproduction device with recording media brightness compensation. A color reproduction device includes a device for converting the native color values of the scanner into a device independent color space, a test target, the desired values of each patch of the test target and a printing device. The method includes printing the test target and scanning it with a scanner that forms a part of the color reproduction device. The device compares the desired values with the values obtained from scanning the printed test target to obtain a set of adjustment values to compensate for drift in the output of the color reproduction device. The compensation includes compensation for utilizing a recording media that does not have the same white characteristics as the recording media that was used to generate the scanner profile used in converting the scanner dependent color space values to a device independent color space values.

### SUMMARY

An objective of the present invention is to enable easily determining the color characteristics of the print medium, and enable the printer to print according to the color characteristics of the print medium.

To achieve the foregoing objective, according to a first aspect of the invention an information processing method is provided according to claim 1.

Because the media properties information in this configuration is information combining interval names for three parameters, the color characteristics of the print medium can be easily determined based on the media properties information. The media properties information is also information identifying a media piece, which segments the HSV color space based on the print medium, and the media piece identified by the media properties information is a piece corresponding to the color characteristics of the print medium. As a result, when printing with the printer, the printer can be controlled to print appropriately to the color characteristics of the print medium by using the media properties information.

This configuration enables providing the appropriate color profile corresponding to the color characteristics of the print medium.

In an information processing method according to another aspect of the invention, the interval names of the hue parameter include expressions describing the tendency of the hue in a particular interval; the interval names of the saturation parameter include expressions describing the relative degree of saturation in a particular interval in the range of possible saturation parameter values; and the interval names of the value parameter include expressions describing the relative degree of value in a particular interval in the range of possible value parameter values.

This configuration enables the user to intuitively and sensorially understand the color characteristics of the print medium based on the media properties information.

In an information processing method according to another aspect of the invention, the descriptive expressions include a word and a number.

This configuration enables the user to intuitively and sensorially understand the color characteristics of the print medium based on the media properties information.

In an information processing method according to another aspect of the invention, the print medium stores the media properties information.

This configuration enables using the media properties information stored by an information processing device by accessing the information processing device through a public network.

In an information processing method according to another aspect of the invention, the size of each media piece group segmenting a desired position in the HSV color space by print medium dependency is equal to or smaller than the size of each printer piece group segmenting the desired position in the HSV color space by printer dependency.

Thus comprised, a printer piece can be created for a specific media piece identified by the media properties information regardless of the model of printer.

In an information processing method according to another aspect of the invention, when the HSV color space is segmented by print medium dependency or printer dependency, the length of saturation parameter intervals where the degree of saturation is low is shorter than the length of the saturation parameter intervals where the degree of saturation is high.

This configuration enables setting the size of the saturation parameter intervals appropriately to the saturation characteristics.

In an information processing method according to another aspect of the invention, when the HSV color space is segmented by print medium dependency or printer dependency, the length of value parameter intervals where the degree of value is low is shorter than the length of the value parameter intervals where the degree of value is high.

This configuration enables setting the size of the value parameter intervals appropriately to the value characteristics.

In an information processing method according to another aspect of the invention, when the HSV color space is segmented by print medium dependency or printer dependency, the length of the hue parameter intervals corresponding to first hues is shorter than the length of the hue interval corresponding to second hues, which are different from the first hues.

This configuration enables setting the size of the hue parameter intervals appropriately to the hue characteristics.

In an information processing method according to another aspect of the invention, a reference color profile prepared for each printer piece group is stored; and to print by a particular printer on a particular print medium, the reference color profile for that printer piece group is corrected by a specific method based on the media properties information of that print medium, and the corrected color profile is provided.

This configuration enables providing the appropriate color profile corresponding to the color characteristics of the print medium.

In an information processing method according to another aspect of the invention, the specific method uses the identified location of the identified media piece in the HSV color space and the identified printer piece at the location indicated by a vector cancelling the vector from a specific point to the location of the identified media piece, and corrects the reference color profile for the position corresponding to the specific point to determine the vector in the direction cancelling the vector from a specific point in the HSV color space to the specific media piece.

This configuration enables providing the appropriate color profile corresponding to the color characteristics of the print medium.

In an information processing method according to another aspect of the invention, the specific point is the origin of the HSV color space.

This configuration enables providing the appropriate color profile corresponding to the color characteristics of the print medium.

A second aspect of the invention is an information processing device storing media properties information according to claim 13.

Because the media properties information in this configuration is information combining interval names for three parameters, the color characteristics of the print medium can be easily determined based on the media properties information. The media properties information is also information identifying a media piece, which segments the HSV color space based on the print medium, and the media piece identified by the media properties information is a piece corresponding to the color characteristics of the print medium. As a result, by using the media properties information stored by the information processing device, the printer can print appropriately to the color characteristics of the print medium.

This configuration enables providing the appropriate color profile corresponding to the color characteristics of the print medium.

Other objects and attainments together with a fuller understanding of the invention will become apparent and appreciated by referring to the following description and claims taken in conjunction with the accompanying drawings.

### BRIEF DESCRIPTION OF THE DRAWINGS

Embodiments of the present invention will now be described by way of further example only and with reference to the accompanying drawings, in which:
FIG. 1 shows the configuration of an information processing system according to a first embodiment of the invention.
FIG. 2 is a block diagram illustrating the functional configuration of a media server.
FIG. 3 is a block diagram illustrating the functional configuration of devices in a printing system.
FIG. 4 is a flow chart of the operation of a terminal and media server.
FIG. 5 shows an example of a media properties information registration screen.
FIG. 6A shows an example of a hue parameter table.
FIG. 6B shows an example of a saturation parameter table.
FIG. 6C shows an example of a value parameter table.
FIG. 7 is used to describe hue in the HSV color space.
FIG. 8 shows an example of a media properties information registration screen.
FIG. 9 shows an example of media properties information.
FIG. 10 illustrates an HSV color space.
FIG. 11 shows an example of a media list.
FIG. 12 shows an example of a media list.
FIG. 13 shows an example of a completed registration report screen.
FIG. 14 is a flow chart of the operation of an image processing device, printer, and control device.
FIG. 15 is a flow chart of the operation of the control device.
FIG. 16 shows an example of color profile set data.
FIG. 17 illustrates an HSV color space.
FIG. 18 illustrates a printer piece group and media piece groups.
FIG. 19 illustrates the relationship between media properties information and printer pieces.
FIG. 20 illustrates an HSV color space.
FIG. 21 illustrates media properties information in a third embodiment of the invention.
FIG. 22A shows an example of a hue parameter table.
FIG. 22B shows an example of a saturation parameter table.
FIG. 22C shows an example of a value parameter table.
FIG. 23 shows an example of a media list.
FIG. 24 is a flow chart of the operation of an image processing device, printer, and media server according to a fourth embodiment of the invention.

### DESCRIPTION OF EMBODIMENTS

Preferred embodiments of the present invention are described below with reference to the accompanying figures.

### Embodiment 1

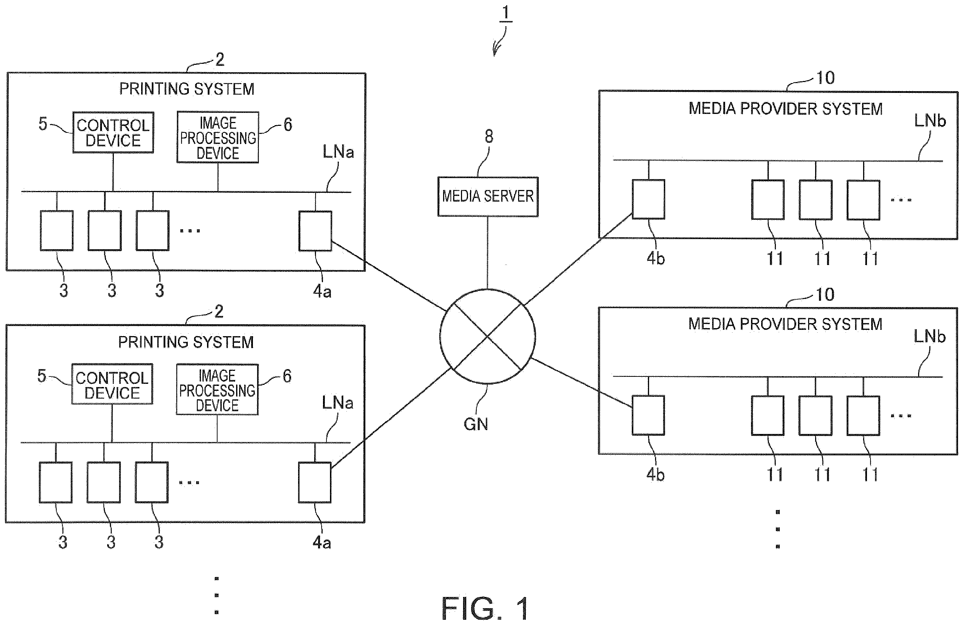

FIG. 1 illustrates the configuration of an information processing system 1 according to this embodiment of the invention.

As shown in FIG. 1, the information processing system 1 includes multiple printing systems 2 connected to a global network GN (public network) such as the Internet, telephone network, or other communication network.

Each printing system 2 is a system deployed in an environment where printing is done by a printer 3 (information processing device). An example of an environment where the printing system 2 is deployed in this embodiment is a manufacturing plant of a company that provides a service such as producing printed materials that are printed by a printer 3 in response to customer requests, and supplying the printed materials to the customer.

Herein, a person using the printer 3 is referred to as simply the user.

The printing system 2 has a local area network LNa. The local area network LNa is a computer network configured in the environment where the printing system 2 is used.

Connected to the local area network LNa is a communication device 4a. The communication device 4a is an interface device connecting the local area network LNa to the global network GN. The communication device 4a has the functions of a modem (or ONU (Optical Network Unit)), a router, a NAT (Network Address Translation) device, and a DHCP (Dynamic Host Configuration Protocol) server. The communication device 4a passes data between devices when a device connected to the local area network LNa and a device connected to the global network GN communicate. Note that in FIG. 1 the communication device 4a is represented by a single block, but the communication device 4a may be configured from multiple devices corresponding to particular functions.

Multiple printers 3 are also connected to the local area network LNa. A printer 3 is a device in which print media is installed and which has functions for printing on the installed print medium. The print media are not limited to paper media, and may be any film, fiber, or other medium that can be loaded in the printer 3 and which the printer 3 can print on. The configuration, functions, and processes of the printer 3 are described below.

Note that a print medium being installed (loaded) in the printer 3 means that the printer 3 is in a condition able to print on the print medium, and how the print medium is installed may vary according to the specifications of the printer 3 or the type of print medium (including whether the print medium is a cut-sheet medium or roll paper).

A control device 5 (information processing device; a device capable of communicating with an external device through a network) and image processing device 6 (information processing device) are also connected to the local area network LNa. The configuration, functions, and processes of these devices are also described below.

As shown in FIG. 1, the information processing system 1 includes a media server 8 (information processing device, server) connected to the global network GN. The media server 8 is a server that can communicate with at least the printer 3, control device 5, and a terminal 11 described below as clients. The media server 8 is represented by a single block in FIG. 1, but this does not mean that the media server 8 is necessarily embodied by a single server device. For example, the media server 8 may comprise multiple server devices. In other words, the media server 8 may be configured in any way enabling it to execute the processes described below. The configuration, functions, and processes of the media server 8 are described below.

As shown in FIG. 1, the information processing system 1 also includes multiple media provider systems 10. A media provider system 10 is a system deployed in a facility managed by a provider of print media. The print media provider is, for example, a manufacturer that manufactures and sells print media. The facility managed by the print media provider may be an office of the vendor, for example. For convenience, the print media provider is referred to below as the media provider. The media provider conceptually includes the organization that provides print media, and people associated with the organization.

The media provider system 10 includes a local area network LNb. The local area network LNb is a computer network used in the facility (environment) where the media provider system 10 is deployed. A communication device 4b is connected to the local area network LNb. The communication device 4b is a device with functions comparable to the communication device 4a described above.

Multiple terminals 11 are connected to the local area network LNb. A terminal 11 herein is a computer equipped with an LCD panel or other display means, and a mouse, keyboard, or other appropriate input means. A browser is also installed on the terminal 11. The terminal 11 is used by the media provider.

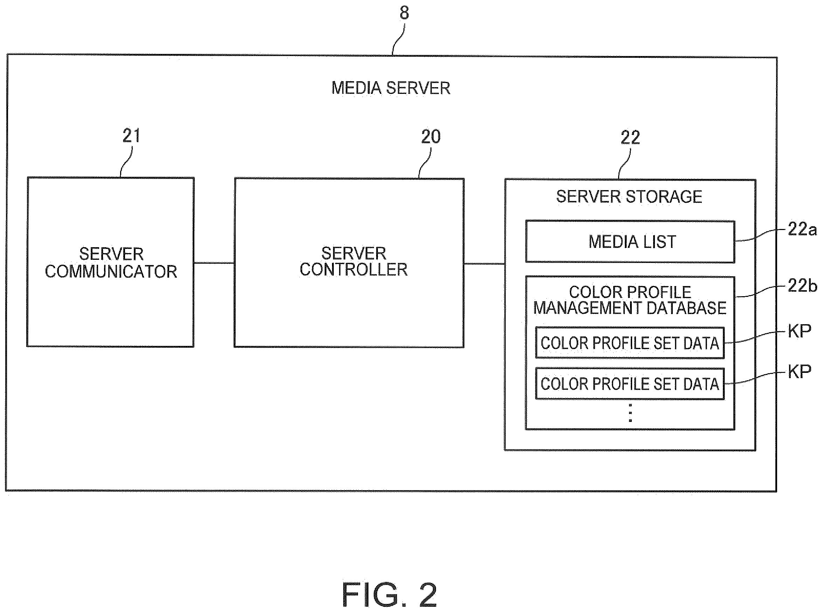

FIG. 2 is a block diagram illustrating the functional configuration of the media server 8.

As shown in FIG. 2, the media server 8 includes a server controller 20, server communicator 21, and server storage 22.

The server controller 20 includes a CPU, ROM, RAM, and other signal processing circuits not shown, and controls other parts of the media server 8. The server controller 20 executes processes by the cooperation of hardware and software, such as a CPU reading and running a program copied from ROM or other server storage 22 to RAM, or by functions embedded in an ASIC, or by a signal processing circuit processing signals and executing processes.

The server communicator 21 communicates as controlled by the server controller 20 with devices connected to the global network GN according to a specific communication protocol.

The server storage 22 has a storage device including nonvolatile memory, and stores data. The server storage 22 stores a media list 22a and a color profile management database 22b. The media list 22a and color profile management database 22b are described below.

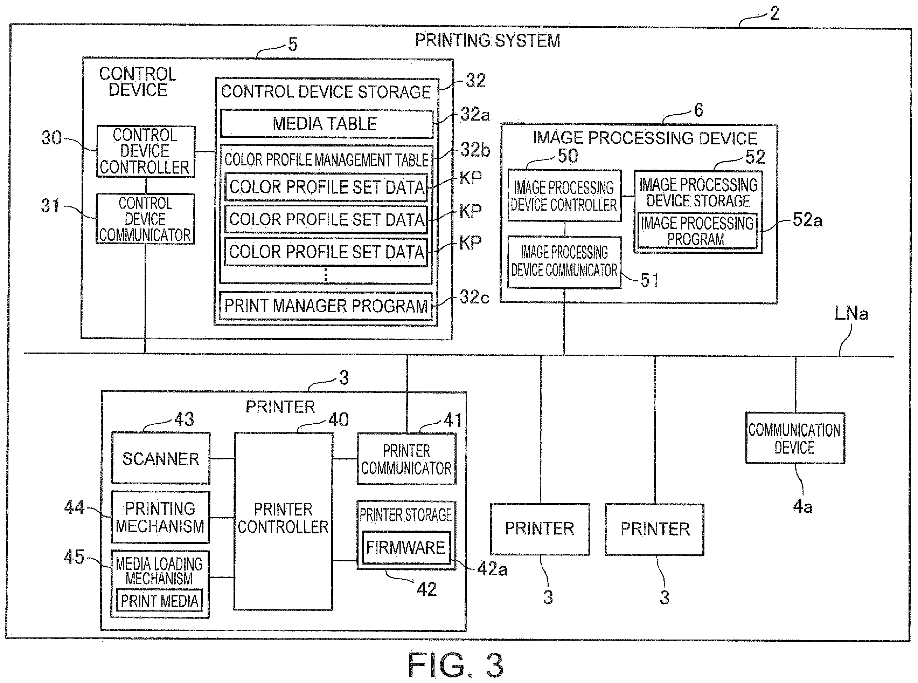

FIG. 3 is a block diagram illustrating the functional configuration of the devices in the printing system 2.

The control device 5 is a computer that functions as a server on the local area network LNa with the image processing device 6 and printer 3 as clients.

As shown in FIG. 3, the control device 5 includes a control device controller 30, control device communicator 31, and control device storage 32.

The control device controller 30 includes a CPU, ROM, RAM, and other signal processing circuits not shown, and controls other parts of the control device 5. The control device controller 30 executes processes by the cooperation of hardware and software, such as a CPU reading and running a program copied from ROM or other control device storage 32 to RAM, or by functions embedded in an ASIC, or by a signal processing circuit processing signals and executing processes.

The control device communicator 31, as controlled by the control device controller 30, communicates with devices connected to the local area network LNa or global network GN according to a specific communication protocol.

The control device storage 32 comprises an EEPROM or other nonvolatile memory device, and stores data. The control device storage 32 stores a media table 32a and a color profile management table 32b. These tables are described further below.

A print manager program 32c is installed on the control device 5. The control device controller 30 reads and runs the print manager program 32c, and executes processes such as described below by functions of the print manager program 32c.

Various types of print media can be loaded in the printer 3, which is an inkjet printer that ejects ink from an inkjet head to form dots on the loaded print medium, and prints images.

More particularly, the printer 3 according to this embodiment is a large format printer (LFP) to which large format media can be installed as the print medium. In one example, A0 size sheet media can be loaded as the print medium, and in another example roll paper with a paper width exceeding 900 mm can be installed.

As shown in FIG. 3, the printer 3 has a printer controller 40, printer communicator 41, printer storage 42, scanner 43, printing mechanism 44, and media loading mechanism 45.

The printer controller 40 includes a CPU, ROM, RAM, and other signal processing circuits not shown, and controls other parts of the printer 3. The printer controller 40 executes processes by the cooperation of hardware and software, such as a CPU reading and running a program copied from ROM or other printer storage 42 to RAM, or by functions embedded in an ASIC, or by a signal processing circuit processing signals and executing processes.

The printer communicator 41, as controlled by the printer controller 40, communicates with devices connected to the local area network LNa or global network GN according to a specific communication protocol.

The printer storage 42 comprises an EEPROM or other nonvolatile memory device, and stores data.

Firmware 42a is installed on the printer 3. The printer controller 40 executes processes by functions of the firmware 42a by reading and running the firmware 42a.

The scanner 43 has a reading device including an antenna and an RF circuit for exchanging radio signals with IC tags (storage media), communicates with IC tags according to a specific communication protocol, and reads data from the IC tags. The IC tags from which the scanner 43 reads data in this example are passive IC tags that drive IC devices of the IC tag by power induced in the antenna of the IC tag.

The printing mechanism 44 in this embodiment includes an inkjet head that ejects ink and forms dots on the print medium installed in the printer 3; a platen disposed to a position opposite the printhead to support the print medium; a suction fan for maintaining an appropriate platen gap between the inkjet head and the print medium positioned to the platen; a carriage for moving the inkjet head; a conveyance mechanism for conveying the print medium; a tension mechanism for adjusting the tension on the print medium conveyed by the conveyance mechanism; and a heater for drying the print medium after ink is deposited thereon.

The printer controller 40 controls the printing mechanism 44 to print images on the print medium installed to the printer 3.

The media loading mechanism 45 includes a mechanism to which print media can be installed, and has print media installed to the loading mechanism.

The printer 3 has a plurality of printing modes. Each printing mode is defined by a specific combination of print resolution and number of printhead passes. The number of printhead passes means the number of passes the inkjet head makes to print an image in the same area of the print medium when printing on the print medium. The print resolution and number of passes can be set by the user, and a printing mode is determined by setting the print resolution and number of passes. Note that printing modes differ according to the model or type of printer 3. More specifically, the combination of print resolution and number of passes in a printing mode differs according to the specific model of the printer 3.

The image processing device 6 is a computer that functions as a host computer in relation to the printer 3.

As shown in FIG. 3, the image processing device 6 has an image processing device controller 50, image processing device communicator 51, and image processing device storage 52.

The image processing device controller 50 includes a CPU, ROM, RAM, and other signal processing circuits not shown, and controls other parts of the printer 3. The image processing device controller 50 executes processes by the cooperation of hardware and software, such as a CPU reading and running a program copied from ROM or other image processing device storage 52 to RAM, or by functions embedded in an ASIC, or by a signal processing circuit processing signals and executing processes.

The image processing device communicator 51, as controlled by the image processing device controller 50, communicates with devices connected to the local area network LNa or global network GN according to a specific communication protocol.

The image processing device storage 52 comprises an EEPROM or other nonvolatile memory device, and stores data.

An image processing program 52a is installed on the image processing device 6. The image processing device controller 50 executes processes as described below through functions of the image processing program 52a by executing the image processing program 52a.

The image processing program 52a includes RIP (raster image processor) software that generates raster data for the image printed by the printer 3. Raster data is data storing, for each dot in a dot matrix pattern, a gradation value for a specific gradation indicating how much ink to eject for each color of ink the printer 3 can eject (in this example, cyan (C), magenta (M), yellow (Y), black (K)).

By a function of the RIP software, the image processing device controller 50 generates raster data using a color profile. The ICC (International Color Consortium) profile is a commonly used color profile.

As described above, the printer 3 prints to the loaded print medium. The color characteristics of the print medium differ according to the type of print medium. Color characteristics are characteristics related to the color of the printing surface of the print medium. In this example, the color characteristics of the print medium conceptually include the color in a HSV color space of the printing surface of the print medium. The color characteristics of print media differ according to the type of print medium due to such factors as the material from which the print medium is made, color added to the print medium in the process of manufacturing the print medium, and the method of making the print medium. For a printer 3 to print on a print medium with high quality, the color profile used to generate the raster data must be a color profile that reflects the specific color characteristics of the print medium.

It is therefore necessary to enable the user to easily determine the color characteristics of the print medium to improve user convenience as it relates to the color characteristics of the print medium.

The devices in an information processing system 1 according to this embodiment of the invention therefore execute the following processes.

### Information processing system 1 processes when registering media properties information in the media list 22a

Operation of the devices in the information processing system 1 when the media provider registers media properties information (described below) in the media list 22a is described first.

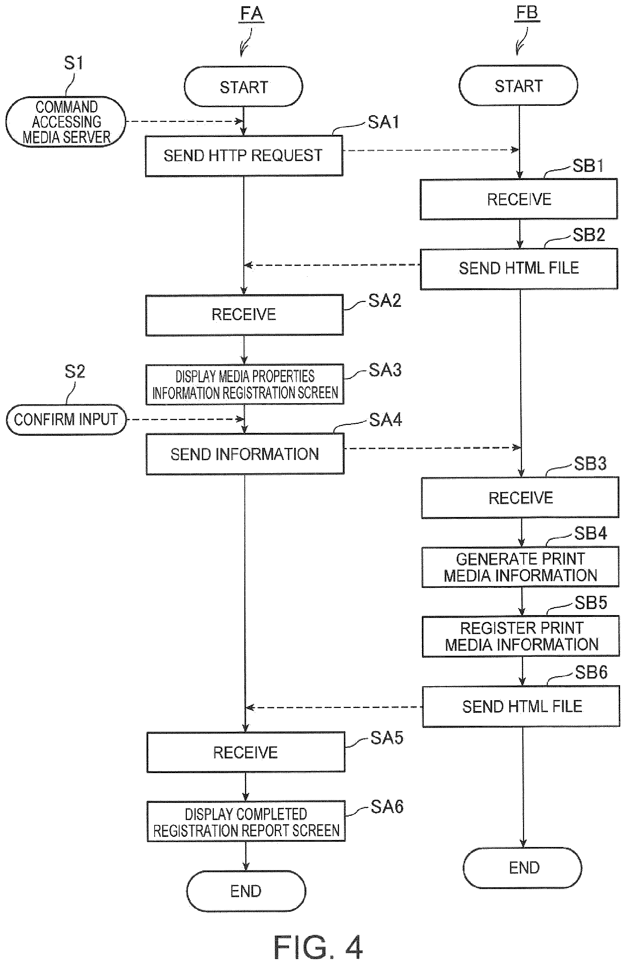

FIG. 4 is a flow chart showing the operation of the terminal 11 and media server 8 when registering media properties information in the media list 22a. Flow chart FA in FIG. 4 shows the operation of the terminal 11, and flow chart FB shows the operation of the media server 8.

In the description referring to the flow charts in FIG. 4, the media provider registers media properties information related to a specific print medium provided by the media provider.

Note that while not described in detail below, the media server 8 and other devices communicate securely using encryption technology and virtual private network technology. When accessed from another device, the media server 8 may also execute appropriate authentication as necessary.

As shown in flow chart FA in FIG. 4, when registering media properties information, the media provider starts the browser on the terminal 11 and inputs a command to access a specific URL on the media server 8 (step S1). The URL is previously made known to the media provider by a specific method.

In response to the command from the media provider, the terminal 11 sends a corresponding HTTP request to the media server 8 (step SA1).

As shown in flow chart FB in FIG. 4, the server controller 20 of the media server 8 controls the server communicator 21 to receive the HTTP request (step SB1).

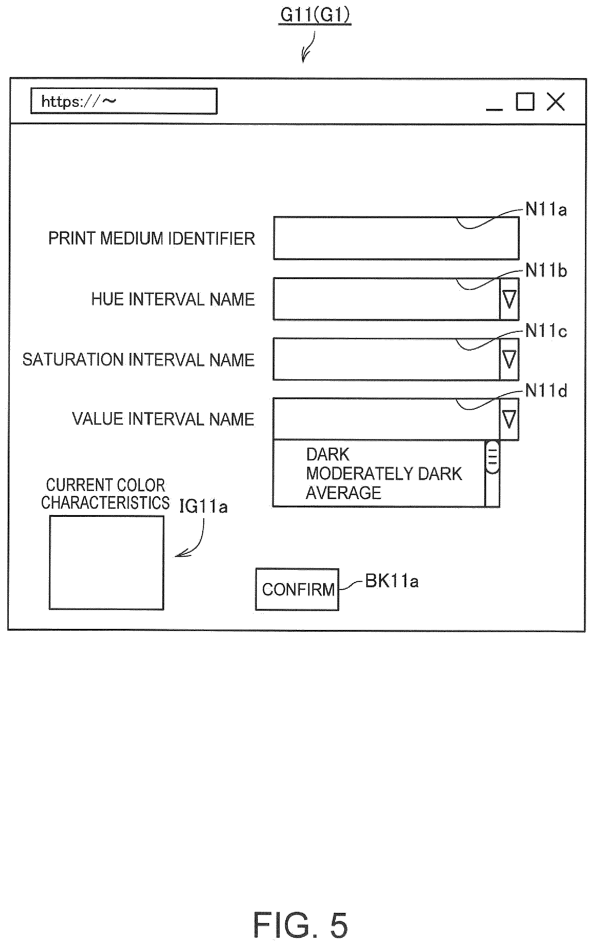

Next, the server controller 20, in response to the received HTTP request, generates and sends to the terminal 11 an HTML file for displaying a media properties information registration screen G1 (FIG. 5) (step SB2).

As shown in flow chart FA in FIG. 4, the terminal 11 then receives the HTML file (step SA2).

Next, the terminal 11, based on the received HTML file, displays the media properties information registration screen G1 on the display means (step SA3).

Two examples of a media properties information registration screen G1 are described below.

FIG. 5 shows media properties information registration screen G11 as an example of a media properties information registration screen G1.

As shown in FIG. 5, the media properties information registration screen G11 has an input field N11a for inputting information identifying a print medium (referred to below as a print medium identifier). The media provider inputs the print medium identifier of the print medium for which to register media properties information to the input field N11a.

The print medium for which print media information is registered is also referred to below as the registered print medium.

As shown in FIG. 5, the media properties information registration screen G11 has an input field Nllb for inputting a hue interval name (interval name), an input field N11c for inputting a saturation interval name (interval name), and an input field Nlld for inputting a value interval name (interval name).

The hue interval name, saturation interval name, and value interval name are described below.

As known from the literature, the HSV color space uses three parameters, hue, saturation, and value, to define a color, and identifies a specific color in the HSV color space by a specific combination of these three parameters.

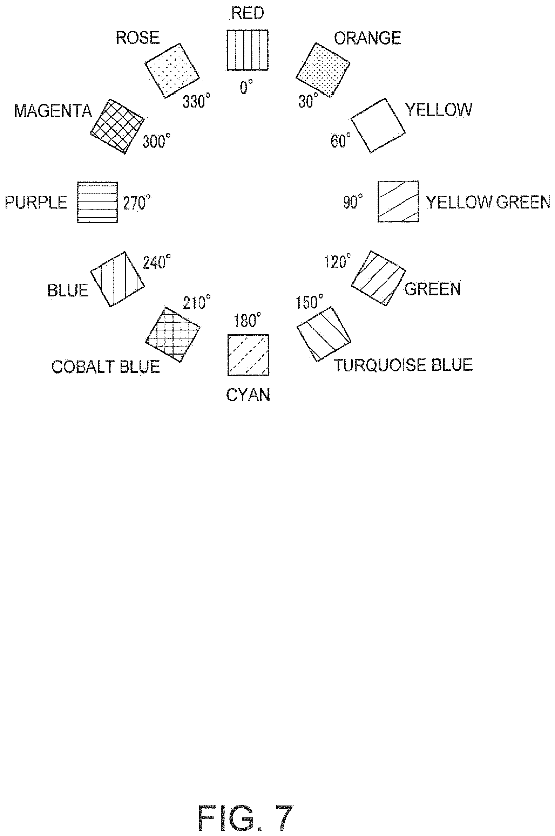

FIG. 7 is used to describe hue in the HSV color space.

In the HSV color space, the parameter for hue (referred to below as the hue parameter) is expressed by the angle on a circle through which the hue changes from 0° to 360° according to the change in the frequency of the hue, starting with red at 0°. The circle related to hue in the HSV color space with red at 0° is referred to below as the hue circle.

Hues shown on the hue circle in FIG. 7 are pure colors with both saturation and value at 100%. In the hue circle in FIG. 7, the hue at a hue parameter of 0° is red; the hue at a hue parameter of 30° is orange; the hue at a hue parameter of 60° is yellow; the hue at a hue parameter of 90° is yellow green; the hue at a hue parameter of 120° is green; the hue at a hue parameter of 150° is turquoise blue; the hue at a hue parameter of 180° is cyan; the hue at a hue parameter of 210° is cobalt blue; the hue at a hue parameter of 240° is blue; the hue at a hue parameter of 270° is purple; the hue at a hue parameter of 300° is magenta; the hue at a hue parameter of 330° is rose.

As described above, the hue parameter takes a value from hue parameter 0° to hue parameter 360°.

In this embodiment, the range of possible hue parameter values is divided into 12 segments. The segments into which the hue parameter values are divided are referred to as hue intervals. More specifically, the range of possible hue parameter values is divided into a first hue interval from hue parameter 345° to hue parameter 15°; a second hue interval from hue parameter 15° to hue parameter 45°; a third hue interval from hue parameter 45° to hue parameter 75°; a fourth hue interval from hue parameter 75° to hue parameter 105°; a fifth hue interval from hue parameter 105° to hue parameter 135°; a sixth hue interval from hue parameter 135° to hue parameter 165°; a seventh hue interval from hue parameter 165° to hue parameter 195°; an eighth hue interval from hue parameter 195° to hue parameter 225°; a ninth hue interval from hue parameter 225° to hue parameter 255°; a tenth hue interval from hue parameter 255° to hue parameter 285°; an eleventh hue interval from hue parameter 285° to hue parameter 315°; and a twelfth hue interval from hue parameter 315° to hue parameter 345°.

A hue interval name including a word describing the trend of the hue in a particular hue interval is assigned to each hue interval. In this embodiment, red is the hue interval name assigned to the first hue interval; orange is the hue interval name assigned to the second hue interval; yellow is the hue interval name assigned to the third hue interval; yellow green is the hue interval name assigned to the fourth hue interval; green is the hue interval name assigned to the fifth hue interval; turquoise blue is the hue interval name assigned to the sixth hue interval; cyan is the hue interval name assigned to the seventh hue interval; cobalt blue is the hue interval name assigned to the eighth hue interval; blue is the hue interval name assigned to the ninth hue interval; purple is the hue interval name assigned to the tenth hue interval; magenta is the hue interval name assigned to the eleventh hue interval; and rose is the hue interval name assigned to the twelfth hue interval.

As described above, a hue interval name includes a word representing the hue of the hue parameter in the center of the range of the corresponding hue interval. The word representing the hue of the hue parameter in the center of the range of one hue interval may be said to express the tendency of the hues in that one hue interval. By recognizing the hue interval name, a person can therefore intuitively and sensorially understand the tendency of hues in the hue interval corresponding to the hue interval name.

The length of a hue interval in this embodiment is the same 30° for all hue intervals. The following configuration is therefore possible based on the characteristics of hue.

Specifically, humans are typically sensitive to changes in hue when the hue is near hue parameter 0°, and relatively insensitive to changes in hue when the hue is near the hue parameter of 180°. For example, when a color changes 5° in hue from hue parameter 0°, a person observing the color tends to recognize, that is, be sensitive to, the change in hue, but when a color changes 5° in hue from hue parameter 180°, a person observing the color tends to be unable to recognize, that is, be relatively insensitive to, the change in hue.

As a result, the length (range) of hue intervals corresponding to hues (first hues) near hue parameter 0° may be shorter than the length (range) of the hue intervals corresponding to hues (second hues) near hue parameter 180°. For example, when the range of possible hue parameters is divided into twelve hue intervals, the ranges of the three hue intervals near hue parameter 0° may be set to 10°, the ranges of the three hue intervals near hue parameter 180° may be set to 50°, and the ranges of the remaining hue intervals may be set to 30°.

In the HSV color space, the parameter of saturation (referred to below as the saturation parameter) takes a value in the range 0% to 100%. As known from the literature, a saturation parameter of 100% represents full saturation (saturation corresponding to a pure color), and as the value of the saturation parameter decreases, saturation decreases and becomes paler (less chroma; less saturated) to a saturation parameter of 0% representing complete desaturation (least colorful, saturation corresponding to no chroma).

In this embodiment, the range of possible saturation parameter values is divided into five intervals. Below, saturation interval is used to refer to the intervals into which the saturation parameters are divided. More specifically, the range of possible saturation parameter values is divided into a first saturation interval of saturation parameters from 0% to 20%; a second saturation interval of saturation parameters from 20% to 40%; a third saturation interval of saturation parameters from 40% to 60%; a fourth saturation interval of saturation parameters from 60% to 80%; and a fifth saturation interval of saturation parameters from 80% to 100%.

A saturation interval name including a word describing the trend of the saturation in a particular saturation interval is assigned to each saturation interval. In this embodiment, Desaturated is the saturation interval name of the first saturation interval; Moderately Desaturated is the saturation interval name of the second saturation interval; Average is the saturation interval name of the third saturation interval; Moderately Saturated is the saturation interval name of the fourth saturation interval; and Saturated is the saturation interval name of the fifth saturation interval.

Note that expressions such as dark may be used instead of Desaturated (or pale) as a saturation interval name.

As described above, saturation interval names include words describing the degree of saturation (chroma) in the corresponding saturation interval name. For example, the saturation interval name Desaturated is used for the first saturation interval. Chroma in the first saturation interval is less (the color is darker) than in other saturation intervals, and as Moderately Desaturated, Average, Moderately Saturated, and Saturated are sequentially assigned as the saturation interval names to the other saturation intervals as the degree of saturation increases, the saturation interval names assigned to each saturation interval describe the degree of saturation in the corresponding saturation interval. The user can therefore intuitively and sensorially understand the degree of saturation in the saturation interval corresponding to a saturation interval name by simply recognizing the saturation interval name.

The length (range) of a saturation interval in this embodiment is the same 20% for all saturation intervals. The following configuration is therefore possible based on the characteristics of saturation.

Specifically, sensitivity to changes in saturation tends to increase as the value of the saturation parameter decreases. For example, when there is a 5% change in saturation from saturation at a saturation parameter of 10%, the person observing the color tends to be sensitive to the change in saturation, but when there is a 5% change in saturation from saturation at a saturation parameter of 90%, the person observing the color tends to be unable to recognize, that is, be insensitive to, the change in saturation.

As a result, the length (range) of the saturation interval when the degree of saturation is low may be smaller than the length (range) of the saturation interval when the degree of saturation is high. For example, when the range of saturation parameters is divided into five saturation intervals, the range of saturation intervals may be divided into a first saturation interval from a saturation parameter of 0% to a saturation parameter of 10%; a second saturation interval from a saturation parameter of 10% to a saturation parameter of 20%; a third saturation interval from a saturation parameter of 20% to a saturation parameter of 40%; a fourth saturation interval from a saturation parameter of 40% to a saturation parameter of 70%; and a fifth saturation interval from a saturation parameter of 70% to a saturation parameter of 100%.

In the HSV color space, the parameter for value (referred to below as the value parameter) takes a value in the range 0% to 100%. As known from the literature, a value parameter of 100% represents full value (lightness corresponding to a pure color), and as the value of the value parameter decreases, the color becomes darker to a value parameter of 0% representing no lightness (that is, black).

In this embodiment, the range of possible value parameter values is divided into five intervals. Below, value interval is used to refer to the intervals into which the value parameters are divided. More specifically, the range of possible value parameter values is divided into a first value interval of value parameters from 0% to 20%; a second value interval of value parameters from 20% to 40%; a third value interval of value parameters from 40% to 60%; a fourth value interval of value parameters from 60% to 80%; and a fifth value interval of value parameters from 80% to 100%.

A value interval name including a word describing the degree of lightness in a particular value interval is assigned to each value interval. In this embodiment, Dark is the value interval name of the first value interval; Moderately Dark is the value interval name of the second value interval; Average is the value interval name of the third value interval; Moderately Bright is the value interval name of the fourth value interval; and Bright is the value interval name of the fifth value interval.

As described above, value interval names include words describing the degree of value (lightness) in the corresponding value interval name. For example, the value interval name Dark is assigned to the first value interval. Because the value (lightness) in the first value interval is the darkest of the value intervals, and as Moderately Dark, Average, Moderately Bright, and Bright are sequentially assigned as the value interval names to the other value intervals as the degree of value increases, the value interval names assigned to each value interval describe the degree of lightness (brightness) in the corresponding value interval. The user can therefore intuitively and sensorially understand the degree of value in the value interval corresponding to a value interval name by simply recognizing the value interval name.

The length (range) of a value interval in this embodiment is the same 20% for all value intervals. The following configuration is therefore possible based on the characteristics of value.

Specifically, sensitivity to changes in value tends to increase as the value of the value parameter decreases. For example, when there is a 5% change in value from value at a value parameter of 10%, the person observing the color tends to be sensitive to the change in value, but when there is a 5% change in value from the value at a value parameter of 90%, the person observing the color tends to be unable to recognize, that is, be insensitive to, the change in value.

As a result, the length (range) of the value interval when the degree of value is low may be smaller than the length (range) of the value interval when the degree of value is high. For example, when the range of value parameters is divided into five value intervals, the range of value intervals may be divided into a first value interval from a value parameter of 0% to a value parameter of 10%; a second value interval from a value parameter of 10% to a value parameter of 20%; a third value interval from a value parameter of 20% to a value parameter of 40%; a fourth value interval from a value parameter of 40% to a value parameter of 70%; and a fifth value interval from a value parameter of 70% to a value parameter of 100%.

The hue interval name, saturation interval name, and value interval name are described above.

As described above, the ranges of three parameters, hue, saturation (chroma), and value, that can be defined in the color space for printing on a print medium are divided into multiple intervals, and an interval name is assigned to each interval.

For any print medium, the size (length, range) of the intervals of the three parameters in the color space applicable to a particular print medium is equal to or smaller than the size of the intervals in the model of a given printer 3 for which the size of the intervals of the three parameters in the color space is smallest.

More specifically, the ranges of possible values for the hue parameter, saturation parameter, and value parameter in the color space of a particular printer 3 is divided into multiple intervals. The size (length) of the intervals of the appropriate parameters in the color space of a printer 3 differ according to the model of printer 3. This is because the specifications (the number of colors and the type of ink in the ink cartridges, for example) of a printer 3 differ according to the model, and the colors a printer 3 can express (print) differ according to the model. In this embodiment, for any print medium, the size (length, range) of the intervals of the three parameters in the color space applicable to a particular print medium is equal to or smaller than the size of the intervals in the model of a given printer 3 for which the size of the intervals of the three parameters in the color space is smallest.

For example, suppose that the size of the hue interval for the model of printer 3 for which the smallest hue interval of the hue parameter in the color space is 15° starting from 0° on the hue circle. In this case, the size of the hue intervals of the hue parameter in the color space for a print medium is 15° starting from 0° on the hue circle or a divisor of 15°. The effect of this is described below.

As shown in FIG. 5, a color characteristics image IG11a is displayed in the media properties information registration screen G11. The color characteristics image IG11a is a rectangular image filled with the color of the hue corresponding to the hue interval name, saturation corresponding to the saturation interval name, and value corresponding to the value interval name currently selected by the media provider. The user, by referencing the color in the color characteristics image IG11a, can see the color corresponding to the selected interval names, and can confirm a match with the color characteristics of the print medium.

As shown in FIG. 5, the media properties information registration screen G11 has an input field Nllb for inputting the hue interval name. The input field Nllb is a pull-down menu. The hue interval names that can be selected are displayed in a list in the pull-down menu associated with the input field N11b.

The media provider selects, from among the hue interval names listed in the pull-down menu of the input field N11b, the hue interval name corresponding to the hue related to the color characteristics of the registered print medium. In response to selection of the hue interval name, the hue interval name selected by the media provider from the input field Nllb is then input. Note that the color characteristics of the registered print medium are appropriately measured or determined in advance, and the media provider selects the appropriate hue interval name from the hue interval names listed in the pull-down menu of the input field N11b.

The input field N11c for inputting the saturation interval name is likewise a pull-down menu displaying a list of selectable saturation interval names. The media provider inputs the saturation interval name corresponding to the saturation related to the color characteristics of the registered print medium to the input field N11c.

The input field Nlld for inputting the value interval name is likewise a pull-down menu displaying a list of selectable value interval names. The media provider inputs the value interval name corresponding to the value related to the color characteristics of the registered print medium to the input field N11d.

As shown in FIG. 5, the media properties information registration screen G11 also has a Confirm button BK11a for confirming input to the input fields shown in the registration screen.

The media provider operates the Confirm button BK11a after inputting information to the input fields of the media properties information registration screen G11. Operating the Confirm button BK11a confirms the input to the media properties information registration screen G11.

As described above, to register media properties information, the media provider can simply select previously defined interval names to define the hue, saturation, and value parameters of the color characteristics of a particular print medium, and does not need to input specific values for the hue, saturation, and value parameters. Convenience is thus improved for the media provider.

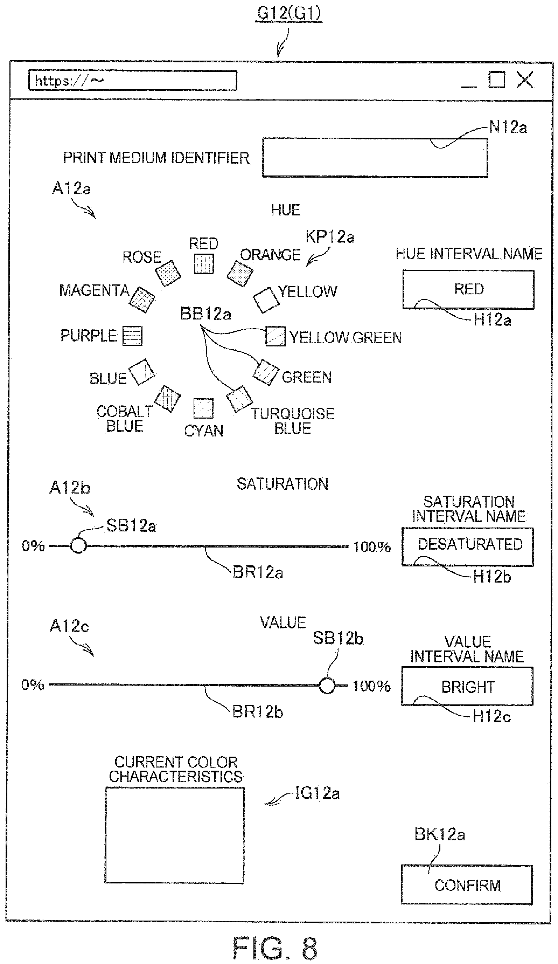

FIG. 8 shows media properties information registration screen G12 as another example of a media properties information registration screen G1.

As shown in FIG. 8, the media properties information registration screen G12 has an input field N12a for inputting a print medium identifier. The media provider inputs the print medium identifier of the print medium for which to register media properties information to the input field N12a.

As shown in FIG. 8, the media properties information registration screen G12 has a field A12a related to hue. A color palette image KP12a is displayed in the field A12a. The color palette image KP12a has multiple hue selection buttons BB12a disposed along the hue circle. Each hue selection button BB12a is a rectangle filled with a different color, and can be operated to select a color. Each hue selection button BB12a corresponds to a specific hue interval name. The hue of the color filling each hue selection button BB12a is the hue (the hue of a pure color) indicated by the hue interval name corresponding to the hue selection button BB12a. The hue selection buttons BB12a are disposed to positions corresponding to a specific hue on the hue circle. A term (in this example, the corresponding hue interval name) expressing the tendency of the hue is also displayed beside each hue selection button BB12a.

A display field H12a is provided on the right side of the color palette image KP12a in the field A12a.

To select a hue interval name, the media provider operates the hue selection button BB12a corresponding to the hue related to the color characteristics of the registered print medium by a specific means such as aligning the cursor with and clicking on the desired button. A hue interval name is selected by selecting a hue selection button BB12a. When a hue selection button BB12a is selected, the hue interval name corresponding to the selected hue selection button BB12a is displayed in the display field H12a.

A script embedded in the HTML file includes a function for specifying the hue interval name corresponding to the selected button based on a hue parameter table PT1 when the user selects a hue selection button BB12a.

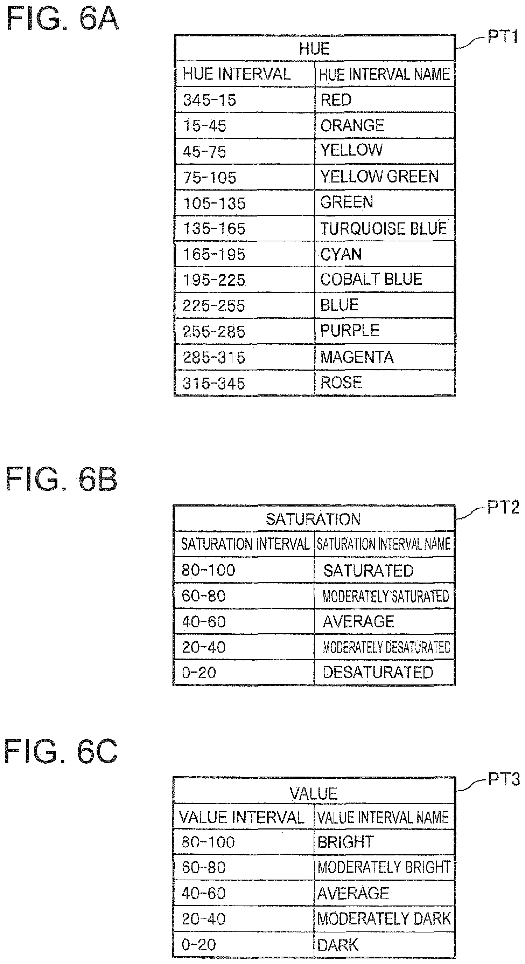

FIG. 6A shows an example of a hue parameter table PT1.

As shown in FIG. 6A, the hue parameter table PT1 is a table relating hue intervals (ranges of angles on the hue circle) to hue interval names. The hue intervals (ranges of angles on the hue circle) correspond to the hue selection buttons BB12a in the color palette image KP12a.

The media provider can therefore input a hue interval name by the simple means of looking at the hues in the color palette image KP12a and selecting the hue selection button BB12a displaying the desired hue in the color palette image KP12a.

As shown in FIG. 8, the media properties information registration screen G12 also has a field A12b related to saturation. A slider bar BR12a enabling setting the saturation parameter in the range from 0% to 100% is displayed in field A12b.

A display field H12b is provided on the right side of the slider bar BR12a in the field A12b.

To select a saturation interval name, the media provider selects the desired saturation parameter by moving the slider button SB12a to the desired position on the slider bar BR12a. By selecting the saturation parameter, the saturation interval name corresponding to the saturation interval associated with the selected saturation parameter is selected. When the saturation parameter is selected, the saturation interval name corresponding to the saturation interval associated with the selected saturation parameter is displayed in the display field H12b.

A script embedded in the HTML file includes a function for specifying the saturation interval name associated with the selected saturation parameter based on a saturation parameter table PT2 when the saturation parameter is selected by the user.

FIG. 6B shows an example of a saturation parameter table PT2.

As shown in FIG. 6B, the saturation parameter table PT2 is a table relating saturation intervals to saturation interval names.

The media provider can therefore input a saturation interval name by the simple means of using the slider bar BR12a to select the desired saturation parameter related to the color characteristics of the registered print medium.

As shown in FIG. 8, the media properties information registration screen G12 also has a field A12c related to value (lightness). A slider bar BR12b enabling setting the value parameter in the range from 0% to 100% is displayed in field A12c.

A display field H12c is provided on the right side of the slider bar BR12b in the field A12c.

To select a value interval name, the media provider selects the desired value parameter by moving the slider button SB12b to the desired position on the slider bar BR12b. By selecting the value parameter, the value interval name corresponding to the value interval associated with the selected value parameter is selected. When the value parameter is selected, the value interval name corresponding to the value interval associated with the selected value parameter is displayed in the display field H12c.

A script embedded in the HTML file includes a function for specifying the value interval name associated with the selected value parameter based on a value parameter table PT3 when the value parameter is selected by the user.

FIG. 6C shows an example of a value parameter table PT3.

As shown in FIG. 6B, the value parameter table PT3 is a table relating value intervals to value interval names.

The media provider can therefore input a value interval name by the simple means of using the slider bar BR12b to select the desired value parameter related to the color characteristics of the registered print medium.

As shown in FIG. 8, a color characteristics image IG12a is displayed below the slider bar BR12b in the media properties information registration screen G12. The color characteristics image IG12a is a rectangular image filled with the color of the hue corresponding to the hue interval name, saturation corresponding to the saturation interval name, and value corresponding to the value interval name currently selected by the media provider. The user, by referencing the color in the color characteristics image IG12a, can see the color corresponding to the selected interval names, and can confirm a match with the color characteristics of the print medium.

As shown in FIG. 8, the media properties information registration screen G12 also has a Confirm button BK12a for confirming the selection of interval names.

The media provider operates the Confirm button BK12a after selecting the hue interval name, saturation interval name, and value interval name in the media properties information registration screen G12. Operating the Confirm button BK12a confirms the input to the media properties information registration screen G12.

As shown in flow chart FA in FIG. 4, when the media provider confirms input to the media type input screen G1 (step S2), the terminal 11, by a function of a script embedded in the HTML file, sends the print medium identifier, hue interval name, saturation interval name, and value interval name to the media server 8 (step SA4).

As shown in flow chart FB in FIG. 4, the server controller 20 of the media server 8 controls the server communicator 21 to receive the print medium identifier, hue interval name, saturation interval name, and value interval name (step SB3).

Next, the server controller 20, based on the information received in step SB3, generates the media properties information (step SB4).

The media properties information is described next.

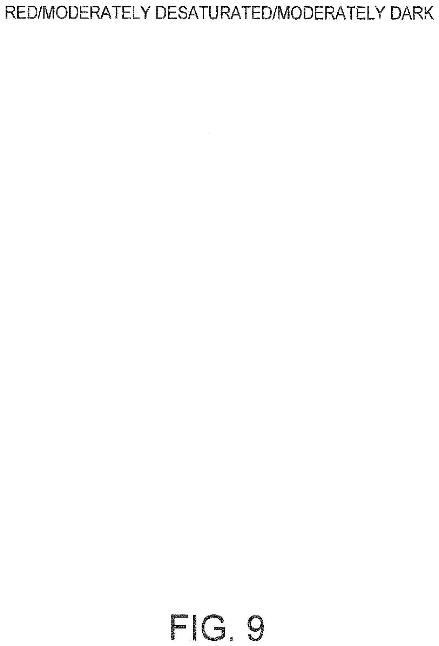

FIG. 9 shows an example of media properties information.

As shown in FIG. 9, the media properties information is information containing the interval names corresponding to the three parameters separated by a specific delimiter character in a predetermined order of parameters. In this embodiment, the interval names corresponding to the three parameters are arrayed in the media properties information in the order hue, saturation, and value separated by a forward slash (/) as the delimiter.

In step SB4, the server controller 20 executes the following process based on the interval names received in step SB3.

More specifically, the server controller 20 generates the media properties information by writing the interval names received in step SB3 in the order hue, saturation, and value with the hue interval name, saturation interval name, and value interval name separated by a forward slash (/) as the delimiter character. The interval names input or selected by the media provider correspond to the color characteristics of the registered print medium. As a result, the media properties information is information comprising the hue interval name corresponding to the hue of the color characteristics of the registered print medium, the saturation interval name corresponding to the saturation of the color characteristics, and the value interval name corresponding to the value of the color characteristics, arranged in a specific order.

The media properties information is described in further detail below.

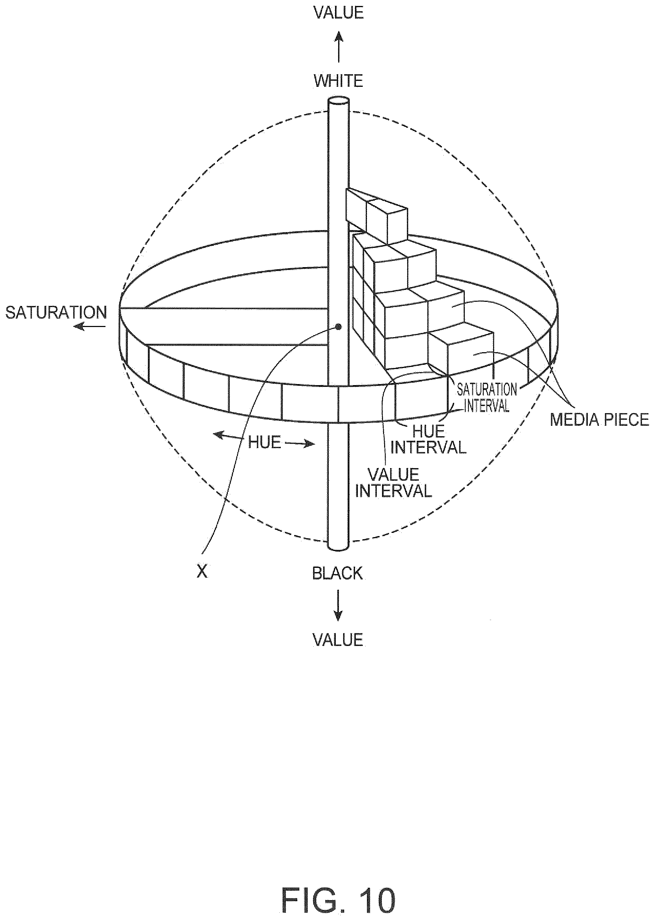

To further describe the media properties information, FIG. 10 illustrates the HSV color space with the saturation parameter axis and value parameter axis perpendicular to each other in a three-dimensional space, and the hue parameter rendered three-dimensionally to reflect the relationship to the saturation parameter and value parameter. Note that the spherical shape shown in FIG. 10 is only one example of a HSV color space, and an HSV color space can also be represented by cylindrical, conical, and other geometries.

In the HSV color space shown in FIG. 10, the point of intersection between the saturation parameter axis and the value parameter axis is the origin X. The origin X corresponds the point where the saturation parameter is 0%, and the value parameter is 50%.

As described above, the three parameters in the HSV color space are divided into multiple intervals to express the color characteristics of a print medium. As a result, the HSV color space is divided into 'pieces' occupying a three-dimensional space for each combination of hue interval, saturation interval, and value interval. Below, a piece in the HSV color space for the color characteristics of a print medium is referred to as a media piece.

As described above, the media properties information contains a combination of a hue interval name, saturation interval name, and value interval name. As a result, one media piece in the HSV color space of the color characteristics for a print medium is identified by the media properties information. More specifically, the media properties information identifies a media piece by the specific combination of the hue interval corresponding to the hue interval name included in the information, the saturation interval corresponding to the saturation interval name included in the information, and the value interval corresponding to the value interval name included in the information.

A media piece identified by the media properties information is a media piece reflecting the hue, saturation, and value of the color characteristics of the print medium. Therefore, the color trend of the color belonging to the media piece identified by the media properties information for a print medium, and the color of the printing surface of the print medium, match.

As described above, the interval names are written in the media properties information in a predetermined order of parameters. The interval names in the media properties information correspond to the three parameters of the color characteristics of the print medium. The effect of this configuration of the media properties information is described next.

Specifically, when a person recognizes the media properties information of a particular print medium, the person can intuitively and sensorially understand the color characteristics of that print medium. Because the media properties information is simply constructed with the interval names arranged in a predetermined order, by standardizing the interval names and standardizing the order in which the interval names are written in the media properties information, the media properties information can be standardized and this is useful for standardization.

Media piece groups are also formed by segmenting the HSV color space based on print media dependency. A desired piece in a media piece group segmenting the HSV color space by print medium dependency can also be identified by the media properties information.

As shown in flow chart FB in FIG. 4, after generating the media properties information in step SB4, the server controller 20 registers the generated media properties information in a media list 22a (step SB5).

A media list 22a is a database containing a record for each print medium.

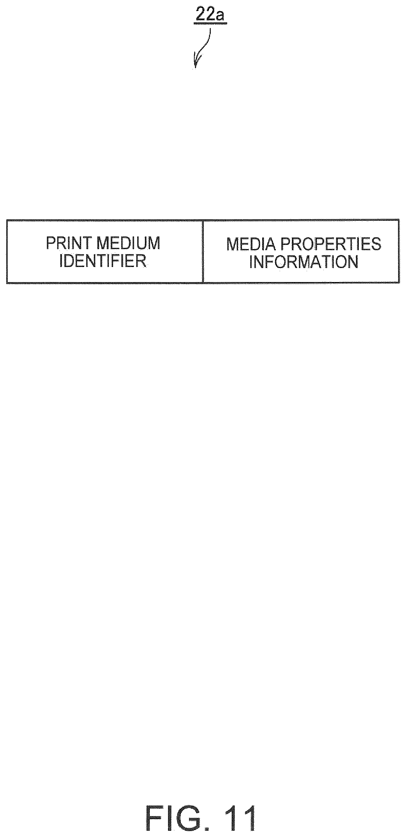

FIG. 11 shows an example of the content of a record in the media list 22a.

As shown in FIG. 11, a record in the media list 22a includes a print medium identifier and media properties information.

Note that the information stored in each record of the media list 22a shown in FIG. 11 is for example only, and records may include other information in addition to a print medium identifier and media properties information. This also applies to the media table 32a described below. For example, each record may include information (referred to below as a media provider identifier) identifying the media provider that provides the print medium.

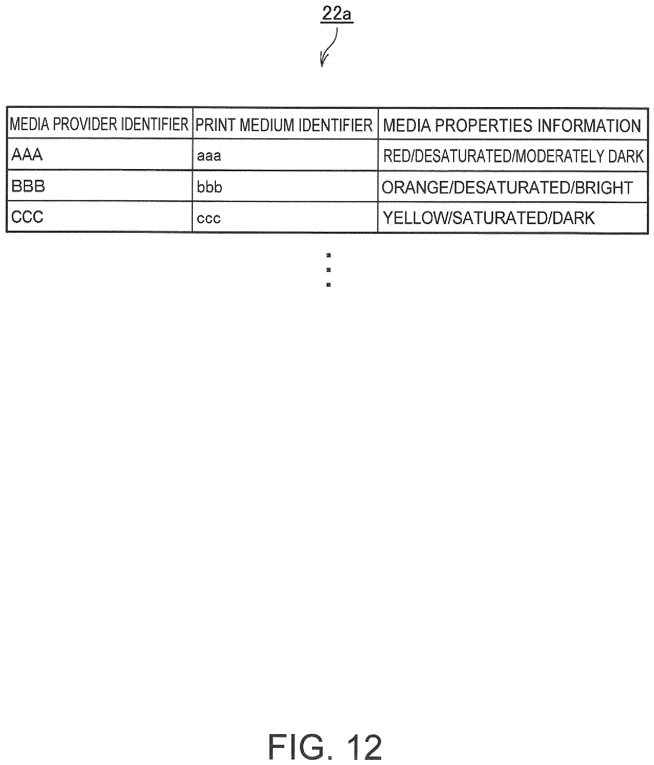

FIG. 12 shows an example of the content of a media list 22a.

The media list 22a shown for example in FIG. 12 contains media provider identifiers, print medium identifiers, and media properties information. As shown in FIG. 12, by each recording containing a media provider identifier, list content can be searched using the media provider identifier as a search key.

In the example in FIG. 12, the media properties information of the print medium of print medium identifier 'aaa' provided by the media provider of media provider identifier 'AAA' is Red/Desaturated/Moderately Dark.

The media properties information of the print medium of print medium identifier 'bbb' provided by the media provider of media provider identifier 'BBB' is Orange/Desaturated/Bright.

The media properties information of the print medium of print medium identifier 'ccc' provided by the media provider of media provider identifier 'CCC' is Yellow/Saturated/Dark.

In step SB5, the server controller 20 registers a record containing the print medium identifier received in step SB3, and the media properties information generated in step SB4, in the media list 22a.

Registering media properties information in the media list 22a is completed by the process of step SB5.

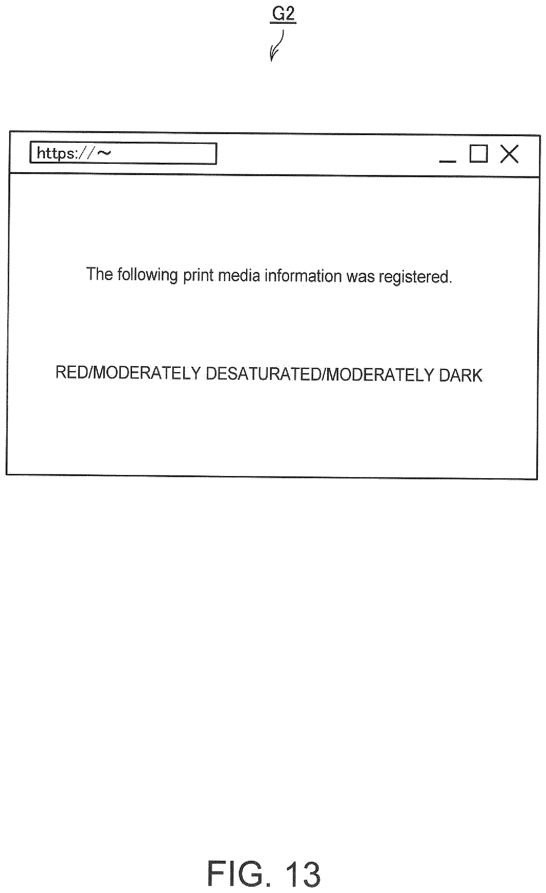

Next, the server controller 20 generates and sends to the terminal 11 an HTML file for displaying a completed registration report screen G2 (FIG. 13) (step SB6).

As shown in flow chart FA in FIG. 4, the terminal 11 then receives the HTML file (step SA5).

Next, the terminal 11, based on the received HTML file, displays on the display means the completed registration report screen G2 (step SA6).

FIG. 13 shows an example of a completed registration report screen G2.

As shown in FIG. 13, information indicating the media properties information and completion of registering the media properties information is displayed in the completed registration report screen G2. By reading the completed registration report screen G2, the media provider can confirm the content of the media properties information and completion of registering the media properties information.

Note that while not described in detail herein, the media provider can, when desired, change the content of the media properties information registered in the media list 22a, and can delete records corresponding to specific media properties information from the records stored in the media list 22a, by means of a specific method.

### Processes of the information processing system 1 when printing by a printer 3

Processed executed by devices in the information processing system 1 when content is printed by a printer 3 are described next.

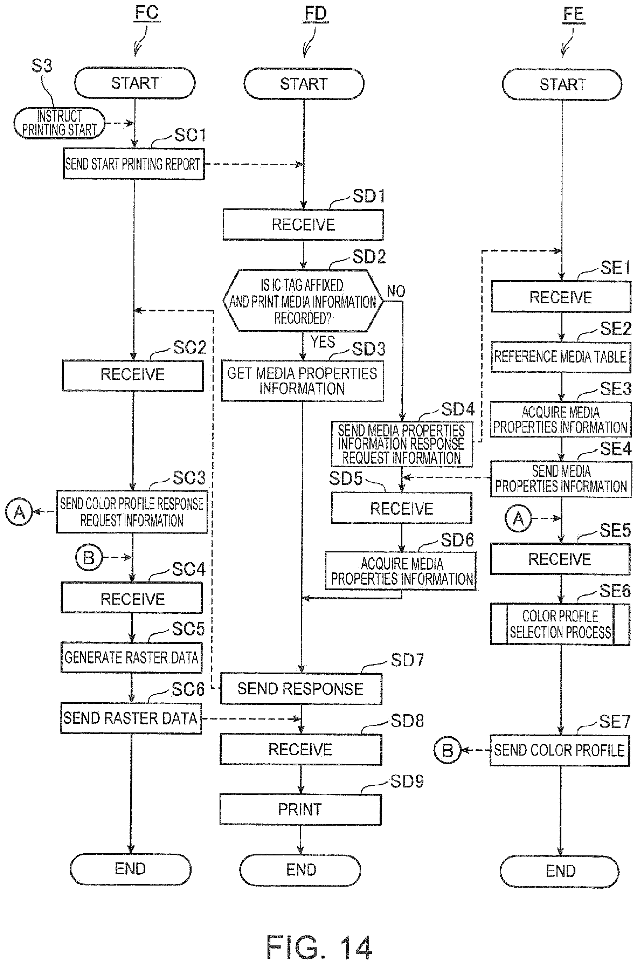

FIG. 14 is a flow chart of the operation of the image processing device 6, printer 3, and control device 5 when printing by the printer 3. Flow chart FC in FIG. 14 shows the operation of the image processing device 6, flow chart FD shows the operation of the printer 3, and flow chart FE shows the operation of the control device 5.

The image processing device 6 executes the processes shown in flow chart FC by the cooperation of hardware and software, such as a CPU reading and running software such as a program including an image processing program 52a.

The printer 3 executes the processes shown in flow chart FD by the cooperation of hardware and software, such as a CPU reading and running software such as a program including firmware 42a.

The control device 5 executes the processes shown in flow chart FE by the cooperation of hardware and software, such as a CPU reading and running software such as a program including an image processing program 32c.

As shown in flow chart FC in FIG. 14, to print by the printer 3, the user, by a specific method, instructs the image processing device 6 to start printing (step S3). When instructing the start of printing, the user also specifies the printer 3 to use for printing. In this example, information identifying the printer 3 (referred to below as a printer identifier) is assigned to each printer 3, and the user specifies the printer identifier for the image processing device 6 by a specific method. The printer identifier may be information (such as a serial number) unique to each printer 3, or a name assigned to the printer 3 to identify a particular printer 3 on the local area network LNa.

The image processing device controller 50 of the image processing device 6 controls the image processing device communicator 51 in response to the user command to start printing, and sends a start printing report instructing the start of printing to the printer 3 specified by the user (step SC1).

Note that the image processing device storage 52 of the image processing device 6 stores, for each printer 3 connected to the local area network LNa, information required to communicate with the printer 3 (information such as the address and the communication protocol to use for communication) relationally to the printer identifier.

As shown in flow chart FD in FIG. 14, the printer controller 40 of the printer 3 controls the printer communicator 41 to receive the start printing report (step SD1).

In response to receiving the start printing report, the printer controller 40 controls the scanner 43 to execute the following process (step SD2).

The printer controller 40 controls the scanner 43 to determine if the print medium installed in the printer 3 has an IC tag, and if the print medium has an IC tag, determines if media properties information is recorded in the IC tag.

When providing print media, the media provider can supply the print medium after affixing an IC tag storing the media properties information to the print medium (which includes a part of its packaging, holder etc). The IC tag is affixed to a part of the print medium that is not consumed by the printer 3 when printing. For example, if the print medium is roll paper, the IC tag may be affixed to the core of the paper roll.

The reading device of the scanner 43 is disposed to a position where it can wirelessly communicate with the IC tag when a print medium having an IC tag affixed is installed in the printer 3.

If it is determined in step SD2 that an IC tag is affixed to the print medium and media properties information is recorded in the IC tag (step SD2: YES), the printer controller 40 goes to step SD3.

In step SD3, the printer controller 40 controls the scanner 43 to read the media properties information from the IC tag and acquire the media properties information. After step SD3, the printer controller 40 goes to step SD7.

If in step SD2 it is determined that an IC tag is not affixed to the print medium or media properties information is not recorded in the IC tag (step SD2: NO), the printer controller 40 goes to step SD4.

In step SD4, the printer controller 40 controls the printer communicator 41 to send a media properties information response request information to the control device 5.

The media properties information response request information includes the print medium identifier of the print medium installed in the printer 3. The media properties information response request information is information requesting transmission of the media properties information for the print medium identified by the print medium identifier included in the response request information. Note that the printer controller 40 acquires the print medium identifier of the print medium installed in the printer 3 by a specific means. For example, the printer controller 40 may prompt the user to input the print medium identifier at a specific timing (such as when the print medium is installed or when the process of step SD4 executes), and acquires the print medium identifier that is input. If the image processing device 6 stores the print medium identifier of the print medium installed in the printer 3 as settings information, the image processing device 6 may be queried for the print medium identifier.

As shown in flow chart FE in FIG. 14, the control device controller 30 of the control device 5 controls the control device communicator 31 to receive the media properties information response request information (step SE1).

Next, the control device controller 30 references the media table 32a stored in the control device storage 32 (step SE2).

The media table 32a is a table with the same data structure as the media list 22a stored by the media server 8, has a record for each print medium, and each record stores a print medium identifier and media properties information.

The content of the media table 32a and the content of the media list 22a are synchronized by a specific method. For example, the specific method may be the same as the method synchronizing the color profile management table 32b with the color profile management database 22b. Furthermore, the media table 32a only needs to store a record for the print media that can be installed in the printers 3 connected to the local area network LNa, and a record for all print media registered in the media list 22a does not need to be stored in the media table 32a.

As shown in flow chart FE in FIG. 14, after referencing the media table 32a in step SE2, the control device controller 30 identifies the corresponding record by comparing the print medium identifier contained in the media properties information response request information with the print medium identifier stored in each record in the media table 32a. The control device controller 30 then acquires the media properties information from the identified record (step SE3).

Next, the control device controller 30 controls the control device communicator 31 to send the media properties information acquired in step SE3 to the printer 3 (step SE4).

As shown in flow chart FD in FIG. 14, the printer controller 40 of the printer 3 controls the printer communicator 41 to receive the media properties information (step SD5).

Next, the printer controller 40 acquires the received media properties information (step SD6). After step SD6, the printer controller 40 goes to step SD7.

In step SD7, the printer controller 40 controls the printer communicator 41 to send response information to the image processing device 6 (step SD7).

The response information includes information identifying the model of printer 3 (referred to below as the model identifier), and the media properties information acquired in step SD3 or step SD6. The response information is information responding to the start printing report.

As shown in flow chart FC in FIG. 14, the image processing device controller 50 of the image processing device 6 controls the image processing device communicator 51 to receive the response information (step SC2).

Next, the image processing device controller 50 controls the image processing device communicator 51 to send color profile response request information to the control device 5 (step SC3).

The color profile response request information includes the model identifier contained in the response information received in step SC2, and media properties information. The color profile response request information is information requesting transmission of a color profile.

As shown in flow chart FE in FIG. 14, the control device controller 30 of the control device 5 controls the control device communicator 31 to receive the color profile response request information (step SE5).

Next, the control device controller 30 executes a color profile selection process (step SE6).

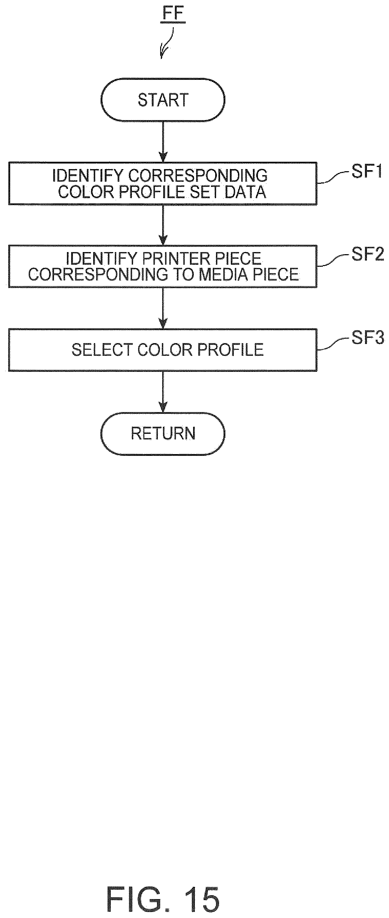

Flow chart FF in FIG. 15 is a flow chart describing the color profile selection process.

The control device storage 32 of the control device 5 stores a color profile management table 32b.

The color profile management table 32b stores color profile set data KP (described below) for each model of printer 3. More specifically, the color profile management table 32b stores color profile set data KP relationally to the model identifier for each model of printer 3.

The color profile set data KP is described next.

In this embodiment of the invention, the hue, saturation, and value parameters of a color space (HSV color space) are divided into multiple intervals for each model of printer 3. The size of the intervals for each parameter are set appropriately to reflect the colors that the printer 3 can express (print). As a result, the HSV color space for a particular printer 3 is divided into pieces having a three-dimensional geometry for specific combinations of hue interval, saturation interval, and value interval. Below, a piece in the HSV color space for a particular printer 3 is referred to as a printer piece.

A printer piece set is created by the HSV color space being divided by printer 3 dependency.

When raster data is generated based on a color profile, bitmap data, which comprises dots (referred to below as pre-conversion dots) storing the amount of each color component expressed by colors in the RGB color space (in this example, red (R), green (G), and blue (B)) as the gradation level of a specific gradation, is converted to raster data, which comprises dots (referred to below as converted dots) storing the amount of each color of ink (for example, cyan (C), magenta (M), yellow (Y), black (K)) that the printer 3 should eject as the gradation value for a specific gradation.

For each printer piece, a color profile set data KP relationally stores a color profile to a printer piece. In the color profile set data KP, a color profile corresponding to one printer piece is a color profile reflecting the tendency of the hue, saturation, and value in the three-dimensional space of the one printer piece in the colors of the converted dots when the pre-conversion dots are converted to converted dots. Therefore, when converting from pre-conversion dots to converted dots based on the color profile corresponding to one printer piece, the tendency of the hue, the tendency of the saturation, and the tendency of the value are adjusted to reflect the hue, saturation, and value of the one printer piece by adjusting the coefficients used for conversion.

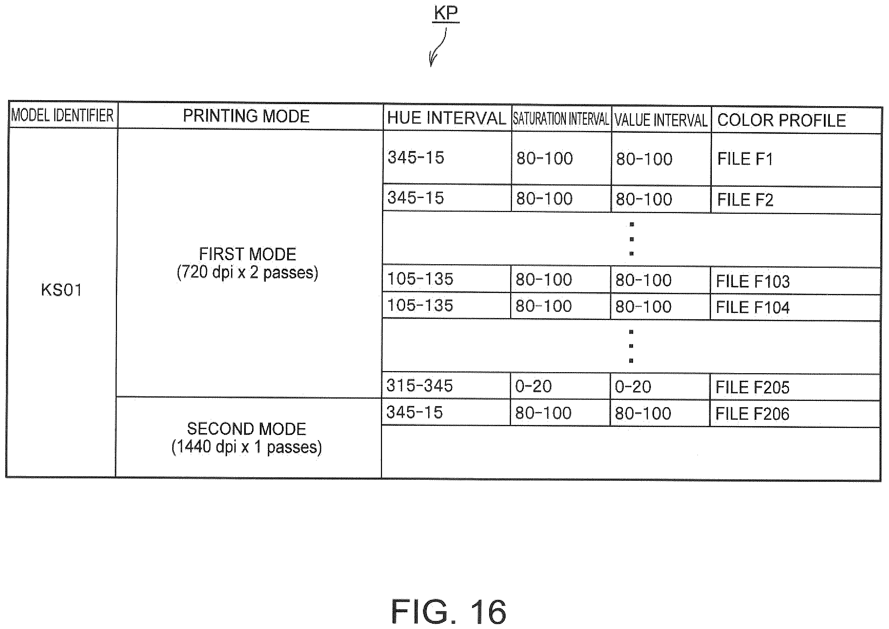

FIG. 16 shows an example of the content of color profile set data KP for one model of printer 3. FIG. 16 shows an example of color profile set data KP storing, for each printing mode of the model of printer 3 (model KS01 in the example in FIG. 16), a color profile for each combination of hue interval, saturation interval, and value interval. Note that for convenience FIG. 16 shows an example in which the color profile set data KP stores actual color profile data, but the color profile set data KP may store the address in memory where the actual color profile data is stored instead of storing the actual data.

As shown in FIG. 16, the color profile set data KP for one model stores a color profile for every possible combination of hue interval, saturation interval, and value interval. For example, if there are twelve hue intervals, five saturation intervals, and five value intervals, the color profile set data KP stores a color profile for each of the 300 (12 x 5 x 5) possible combinations of hue, saturation, and value intervals.

As described above, the color profile management table 32b stores a color profile set data KP for each model of printer 3. For example, if the number of printer 3 models that is managed is 30, the color profile management table 32b stores a color profile set data KP for each of the 30 models.

As described above, related to color profile storage, the control device 5 stores color profile set data KP for each model of printer 3. As described above, the color profile set data KP contains a color profile for each printer piece. Related to color profile storage, the control device 5 may be configured to store, for each model of printer 3, a color profile for each print medium that can be installed in each model of printer 3. However, this poses the following problems.

Specifically, there are many different models of printer 3 and types of print media, and the numbers of both can be expected to increase in the future. As a result, the amount of data that must be stored in the control device 5 for the color profiles is great, and color profile management is complicated. However, this embodiment of the invention can reduce the amount of data that must be stored for color profiles, and simplify color profile management.

The server storage 22 of the media server 8 stores a color profile management database 22b. The color profile management database 22b is a table with the same data structure as the color profile management table 32b. More specifically, the color profile management database 22b stores a color profile set data KP for each model of printer 3.

The content of the color profile management table 32b and the content of the color profile management database 22b are synchronized by a specific method. For example, when the content of a specific color profile set data KP is changed, the media server 8 may send the updated color profile set data KP (or instead of the actual color profile set data KP, data identifying the differences between the original color profile set data KP and the updated color profile set data KP) to the control device 5. Based on the data received from the media server 8, the control device 5 then updates the content of the color profile management table 32b. Furthermore, the color profile management table 32b only needs to store color profile set data KP for each model of printer 3 that connects to the local area network LNa, and does not need to store color profile set data KP for all models registered in the color profile management database 22b.

As shown in flow chart FF in FIG. 15, the control device controller 30 finds in the color profile set data KP stored in the color profile management table 32b the color profile set data KP related to the model identifier contained in the received color profile response request information (step SF1).

Next, the control device controller 30 finds in the HSV color space the printer piece corresponding to the media piece identified by the media properties information in the received color profile response request information (step SF2).

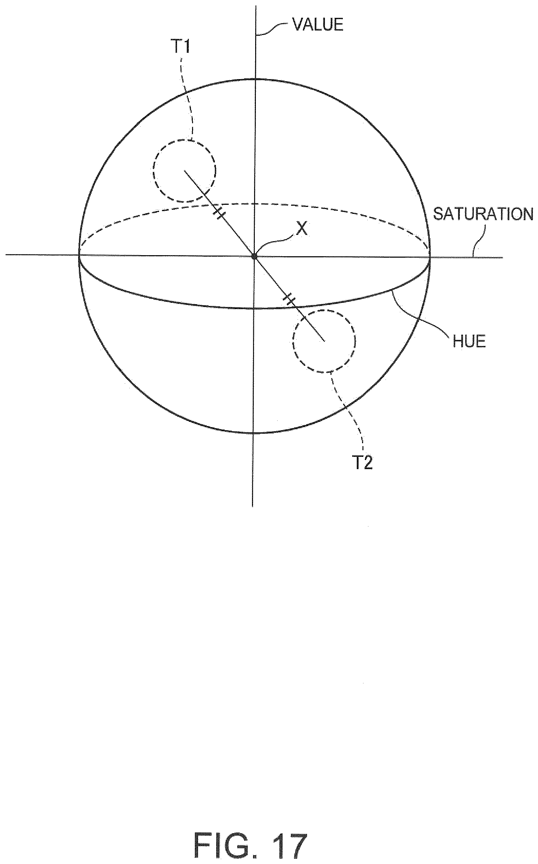

To describe the process of step SF2, FIG. 17 schematically illustrates an HSV color space defined by a hue parameter, saturation parameter, and value parameter (a color space corresponding to the HSV color space in FIG. 10).

In step SF2, the control device controller 30 identifies the location of the media piece identified by the media properties information in the HSV color space. In the example in FIG. 17, space T1 is the location of the media piece.

Next, the control device controller 30 identifies the printer piece at the position point symmetrical to the position of the media piece from the origin X as the center point. As described above, the sizes of the hue parameter, saturation parameter, and value parameter intervals in the HSV color space are different in each model of printer 3. The control device controller 30 identifies the printer piece corresponding to the model identified by the model identifier in the color profile response request information and reflecting the hue parameter, saturation parameter, and value parameter intervals previously set for that model.

As described above, for print media, the size (length, range) of the intervals of the three parameters in the HSV color space is equal to or smaller than the size of the intervals for the model of a given printer 3 for which the size of the intervals of the three parameters in the HSV color space is smallest.

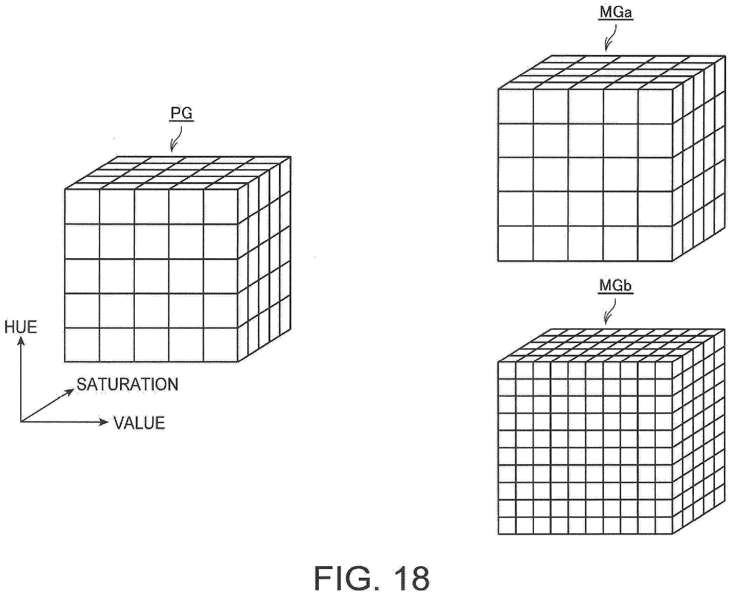

FIG. 18 schematically illustrates a media piece group representing a set of media pieces, and a printer piece group representing a set of printer pieces.

In FIG. 18, a media piece group represents a set of rectangular pieces that are present for each combination of parameter intervals in a three-dimensional color space having hue, saturation, and value axes. Printer pieces are similarly represented.

In FIG. 18, reference numeral PG indicates a printer piece group related to the model of printer 3 having the smallest intervals of the three parameters in the HSV color space.

Reference numeral MGa indicates a media piece group in which the intervals of the three parameters are the same size as the intervals of the three parameters in the printer piece group PG.

Reference numeral MGb indicates a media piece group in which the intervals of the three parameters are smaller than the intervals of the three parameters in the printer piece group PG.

Because of this configuration, for any model, there is a printer piece at a position point symmetrical to the location of the media piece from the origin X as the center point, and the printer piece point symmetrical to the media piece from the origin X as the center point can be uniquely identified. In FIG. 17, space T2 is the location of the identified printer piece.

Below, the media piece identified by the media properties information is referred to as the specific media piece, and the printer piece at the location point symmetrical to the location of the specific media piece from the origin X as the center point is referred to as the specific printer piece.

The relationship between the specific media piece and the specific printer piece is described below.

More specifically, the specific media piece is the media piece corresponding to the color characteristics of the print medium. The hue of the specific printer piece is the complementary color of the hue corresponding to the specific media piece.

The saturation corresponding to the specific printer piece, and the saturation corresponding to the specific media piece, are in a complementary relationship that when added together equal 100% (more specifically, a value corresponding to 100% because each piece has a range).

The value corresponding to the specific printer piece, and the value corresponding to the specific media piece, are also in a complementary relationship that when added together equal 100% (more specifically, a value corresponding to 100% because each piece has a range).

Through tests and simulations, the inventor discovered that, when generating raster data for printing to the print medium corresponding to a single specific media piece, print quality can be particularly improved if raster data is generated to reflect the tendency of the hue, saturation, and value of the specific printer piece corresponding to the single specific media piece.

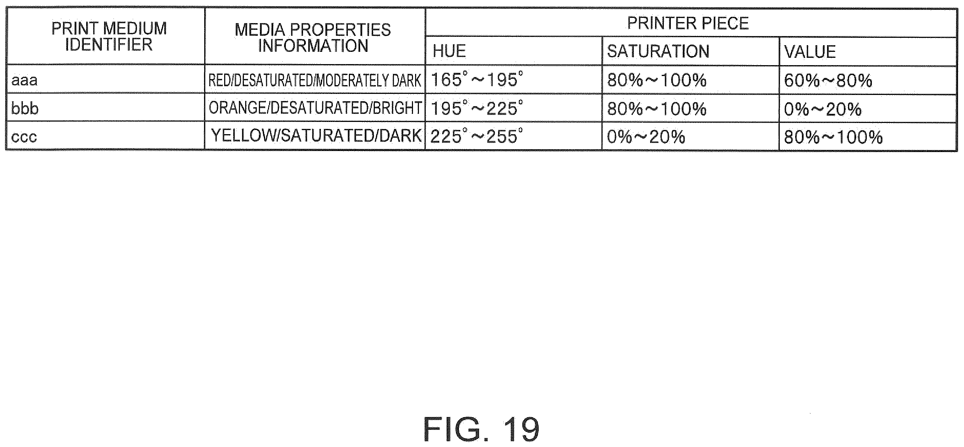

FIG. 19 shows a table of printer pieces for one model of a printer 3 for the print medium of print medium identifier aaa, the print medium of print medium identifier bbb, and the print medium of print medium identifier ccc shown in FIG. 12. For this one model of printer 3, the hue parameters of the HSV color space are divided into intervals of 345° - 15°, 15° - 45°, 45° - 75°, 75° - 105°, 105° - 135°, 135° - 165°, 165° -195°, 195° - 225°, 225° - 255°, 255° - 285°, 285° - 315°, 315° - 345°". The saturation parameters are divided into intervals of 0% - 20%, 20% - 40%, 40% - 60%, 60% - 80%, 80% -100%". The value parameters are divided into intervals of 0% - 20%, 20% - 40%, 40% - 60%, 60% - 80%, 80% - 100%.

In the example shown in FIG. 19, for the print medium of print medium identifier 'aaa', the following printer piece is identified as the printer piece corresponding to the media properties information (Red/Desaturated/Moderately Dark). That is, the printer piece corresponding to the combination of the hue interval 165° - 195°, saturation interval 80% - 100%, value interval 60% - 80% is identified. In this example, the color profile corresponding to the identified printer piece is selected in the color profile set data KP.

In the example shown in FIG. 19, for the print medium of print medium identifier 'bbb', the following printer piece is identified as the printer piece corresponding to the media properties information (Orange/Desaturated/Bright). That is, the printer piece corresponding to the combination of the hue interval 195° - 225°, saturation interval 80% - 100%, value interval 0% - 20% is identified. In this example, the color profile corresponding to the identified printer piece is selected in the color profile set data KP.

In the example shown in FIG. 19, for the print medium of print medium identifier 'ccc', the following printer piece is identified as the printer piece corresponding to the media properties information (Yellow/Saturated/Dark). That is, the printer piece corresponding to the combination of the hue interval 225° - 255°, saturation interval 0% - 20%, value interval 80% - 100% is identified. In this example, the color profile corresponding to the identified printer piece is selected in the color profile set data KP.

The specific printer piece is a printer piece at the location indicated by a vector cancelling the vector in the HSV color space from the origin X (specific point) to the specific media piece. The control device controller 30 calculates the vector from the origin X to the specific printer piece, calculates the vector cancelling the calculated vector, and identifies the printer piece at the position from the origin X indicated by the calculated vector as the specific printer piece.

In the example described above, a specific printer piece is the printer piece at the location point symmetrical to the location of the specific media piece from the origin X as the center point. The center point of symmetry in this case may be the origin X in an HSV color space.

More specifically, the printing surface of a print medium differs according to the surface finish, ink penetration, and other properties. Even if the color characteristics of the printing surface of print media are similar, the color profile appropriate for use from the perspective of improving the print quality differs according to differences in the properties of the printing surface. Based thereon, when determining the specific printer piece for a print medium of one type, the specific printer piece may be determined using a configuration that adjusts and determines the origin X to reflect the specific properties of the print medium of that one type, and uses the calculated center point to determine the specific printer piece. For example, suppose that properties of the printing surface of the print medium are such that the saturation of the formed dots must be reduced compared with other print media when the dots are formed by ejecting ink. In this case, a point that puts the location of the specific printer piece at a position having greater saturation than when the origin X is the center point may be used as the center point in the HSV color space.

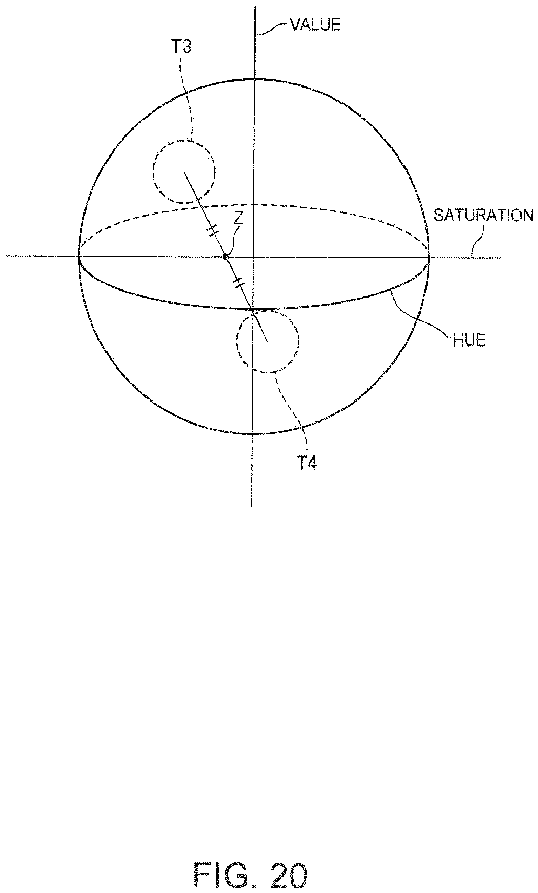

FIG. 20 illustrates the location of the specific media piece and the specific printer piece when a point Z that is not the origin X is used as the center point of symmetry. In FIG. 20, space T3 indicates the location of the specific media piece, and space T4 indicates the location of the specific printer piece.

After identifying the printer piece corresponding to the media piece identified by the media properties information in step SF2, the control device controller 30 selects the color profile corresponding to the identified printer piece in the color profile set data KP (step SF3), and ends the color profile selection process. The color profile selected in step SF3 is the color profile that reflects the hue, saturation, and value tendencies in the three-dimensional space of the printer piece identified in step SF2 in the colors of the converted dots when converting the pre-conversion dots to converted dots. Therefore, when printing with the printer 3, print quality can be improved by generating the raster data using the color profile selected in step SF3.

As shown in flow chart FE in FIG. 14, after executing the color profile selection process in step SE3, the control device controller 30 controls the control device communicator 31 to send the selected color profile to the image processing device 6 (step SE7).

As shown in flow chart FC in FIG. 14, the image processing device controller 50 of the image processing device 6 controls the image processing device communicator 51 to receive the color profile (step SC4).

Next, the image processing device controller 50, by a function of at least RIP software, generates raster data using the color profile received in step SC4 (step SC5). Note that this example supposes the data required to generate raster data is previously input to the RIP software. The data required to generate raster data is, for example, image data for images including text generated by a word processing program, or image data for graphics generated by a drawing program, or image data for pictures captured with a digital camera, for example.

After generating the raster data, the image processing device controller 50 controls the image processing device communicator 51 to send the generated raster data to the printer 3 (step SC6).

As shown in flow chart FD in FIG. 14, the printer controller 40 of the printer 3 then receives the raster data (step SD8).

Next, the printer controller 40 controls the printing mechanism 44 based on the raster data received in step SD8, and causes the printing mechanism 44 to print images to the print medium (step SD9).

As described above, the information processing system 1 in this embodiment of the invention divides the ranges of the possible values of the three parameters defined in the HSV color space, hue, saturation, and value, into multiple intervals; assigns an interval name to each interval; uses a specific combination of the interval names for the three parameters as media properties information; uses the media properties information to identify a particular piece in a media piece group dividing the HSV color space based on print medium dependency; and prints on a print medium based on the media properties information for the specific print medium.

Because the media properties information in this configuration is information combining interval names for three parameters, the color characteristics of the print medium can be easily determined based on the media properties information. The media properties information is also information identifying a media piece segment of the HSV color space, and the media piece identified by the media properties information is a piece corresponding to the color characteristics of the print medium. As a result, when printing with the printer 3, the printer 3 can be controlled to print appropriately to the color characteristics of the print medium by using the media properties information.

The interval names of the hue parameter in this embodiment include expressions describing the tendency of the hue in a particular interval, the interval names of the saturation parameter include expressions describing the relative degree of saturation in a particular interval in the range of possible saturation parameter values, and the interval names of the value parameter include expressions describing the relative degree of value in a particular interval in the range of possible value parameter values.

This configuration enables the user to intuitively and sensorially understand the color characteristics of the print medium from the media properties information.

Print media in this embodiment also have media properties information. More specifically, media properties information is recorded to an IC tag affixed to a part of the print medium that is not consumed by the printer, such as the core member of roll paper.

Thus comprised, the printer 3 can reliably acquire the media properties information of the print medium from the print medium that is actually installed in the printer 3.

In another aspect of the invention, a media server 8 (information processing device) connected to a global network GN (public network) also stores media properties information.

In this configuration, media properties information stored by the media server 8 can be used by accessing the media server 8 through a public telecommunication connection.

An information processing system 1 according to this embodiment has, for each model of printer, a color profile prepared for each printer piece group dividing the HSV color space based on a printer 3 dependency; when printing with a printer 3 of a particular model on a desired print medium, identifies the appropriate printer piece in the printer piece group dividing the HSV color space depending on the model of printer 3 by a specific method based on the media properties information of the print medium; and selects and provides the color profile corresponding to the identified printer piece.

This configuration enables providing the appropriate color profile corresponding to the color characteristics of the print medium.

The information processing system 1 according to this embodiment identifies the location of the media piece identified by the media properties information in the HSV color space, and identifies the printer piece at the position point symmetrical to the location of the media piece with a specific point as the center point.

This configuration enables providing the appropriate color profile corresponding to the color characteristics of the print medium.

In another aspect of the invention, the specific point used as the center point of point symmetry when identifying a printer piece is the origin X.

This configuration enables providing the appropriate color profile corresponding to the color characteristics of the print medium.

An information processing system 1 according to another embodiment of the invention identifies the location of the media piece identified by the media properties information in the HSV color space, and determines the printer piece at the location indicated by a vector cancelling the vector from the specific point to the identified media piece in the HSV color space.

This configuration enables providing the appropriate color profile corresponding to the color characteristics of the print medium.

The size of each media piece group segmenting a desired position in the HSV color space by print medium dependency is equal to or smaller than the size of each printer piece group segmenting the desired position in the HSV color space by printer dependency.

Thus comprised, a printer piece can be created for any media piece identified by the media properties information regardless of the model of printer 3.

In this embodiment, the length of saturation parameter intervals where the degree of saturation is low is shorter than the length of the saturation parameter intervals where the degree of saturation is high.

This configuration enables setting the length of the saturation parameter intervals appropriately to the saturation characteristics.

In this embodiment, the length of value parameter intervals where the degree of value is low is shorter than the length of the value parameter intervals where the degree of value is high.

This configuration enables setting the length of the value parameter intervals appropriately to the value characteristics.

In this embodiment, the length of the hue parameter intervals corresponding to hues (first hues) near hue parameter 0° are shorter than the length of the hue interval corresponding to hues (second hues) near hue parameter 180°.

This configuration enables setting the length of the hue parameter intervals appropriately to the hue characteristics.

### Embodiment 2

A second embodiment of the invention is described next.

Note that like elements in this second embodiment and the first embodiment are identified by like reference numerals, and further description thereof is omitted or simplified.

The process whereby the control device controller 30 of the control device 5 selects a color profile in the second embodiment is different from the process in the first embodiment.

More specifically, in the second embodiment, the control device storage 32 of the control device 5 stores, in the color profile management table 32b, a reference color profile (a color profile used for reference) relationally to the model identifier for each model of printer 3 instead of storing color profile set data KP. The reference color profile is a color profile corresponding to the printer piece at the origin X of the HSV color space for the printer 3.

In this second embodiment, the control device controller 30, in the color profile selection process, generates the color profile provided to the image processing device 6 by correcting the reference color profile based on the media properties information and model identifier contained in the color profile response request information.

More specifically, the print manager program 32c providing the functions of the control device controller 30 receives model identifier and media properties information input, and comprises an algorithm for correcting the reference color profile of the corresponding printer model based on the input information, and outputting the corrected color profile. The algorithm corrects the reference color profile to create a color profile corresponding to the printer piece (piece) at the location point symmetrical to the location of the printer piece identified by the media properties information with the origin X of the color space as the center point.

Note that as described in the first embodiment, the center point of symmetry is not limited to the origin X. More specifically, the center point of symmetry may be adjusted according to the properties of the printing surface.

As described in the first embodiment, a specific printer piece (a printer piece corresponding to the media piece identified by the media properties information) is the printer piece at the location indicated by a vector cancelling the vector from the origin X (specific point) to the specific media piece in the HSV color space.

As a result, in the second embodiment, the control device controller 30 may determine the location of the media piece identified by the media properties information, and correct the color profile that becomes the reference for the position corresponding to the specific center point to determine the vector in the direction cancelling the vector from a specific point in the HSV color space to the specific media piece.

As in the first embodiment, the control device 5 in the second embodiment can provide to the image processing device 6 a color profile appropriate to the color characteristics of the print medium.

More particularly, compared with the first embodiment, the second embodiment can greatly reduce the amount of data that must be stored for color profiles, and simplify color profile management.

### Embodiment 3

A third embodiment of the invention is described next.

In this third embodiment, the interval names assigned to the intervals of the three parameters, hue, saturation, and value, are different from those in the first embodiment.

In the third embodiment, the hue interval names apply information comprising an H, which is the first letter in the term Hue, combined with a hue number. The hue number assigned to one hue interval is the value of the hue parameter (not including the unit symbol °) in the center of the range of that one hue interval. For example, the hue interval name H0 is assigned as the hue interval name of the first hue interval in the first embodiment, and the hue interval name H30 is assigned as the hue interval name of the second hue interval. In this way, the interval names of the hue parameter in the third embodiment include a number indicating the trend of the hue in the interval corresponding to the interval name.

In the third embodiment, the saturation interval names apply information comprising an S, which is the first letter in the term Saturation, combined with a saturation number. The saturation number assigned to one saturation interval is the value of the saturation parameter (not including the unit symbol %) in the center of the range of that one saturation interval. For example, the saturation interval name S10 is assigned as the saturation interval name of the first saturation interval in the first embodiment, and the saturation interval name S30 is assigned as the saturation interval name of the second saturation interval. In this way, the interval names of the saturation parameter in the third embodiment include a number indicating the degree of saturation in the interval corresponding to the interval name.

In the third embodiment, the value interval names apply information comprising a V, which is the first letter in the term Value, combined with a value number. The value number assigned to one value interval is the value of the value parameter (not including the unit symbol %) in the center of the range of that one value interval. For example, the value interval name V10 is assigned as the value interval name of the first value interval in the first embodiment, and the value interval name V30 is assigned as the value interval name of the second value interval. In this way, the interval names of the value parameter in the third embodiment include a number indicating the degree of value in the interval corresponding to the interval name.

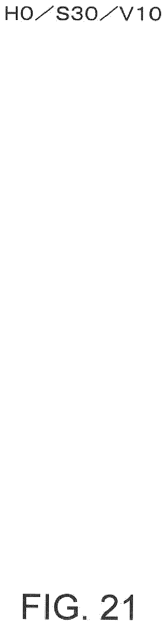

FIG. 21 shows an example of media properties information in the third embodiment of the invention.

As will be understood by comparing FIG. 21 and FIG. 9, the structure of the media properties information in the third embodiment and the structure of the media properties information in the first embodiment is the same. In the third embodiment, the interval names corresponding to the three parameters are arrayed in the media properties information in the order hue, saturation, and value separated by a forward slash (/) as the delimiter.

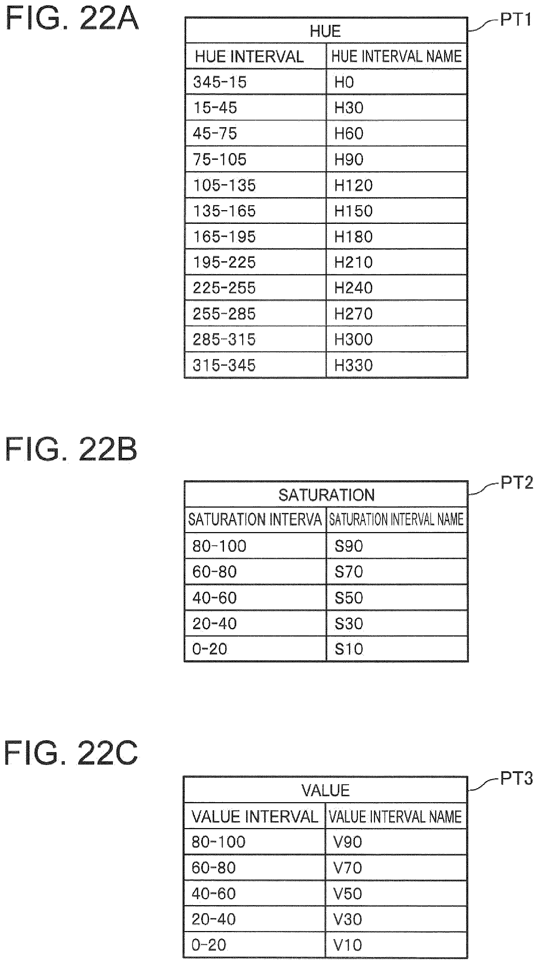

FIG. 22A shows an example of a hue parameter table PT1 according to this embodiment. As shown in FIG. 22A, the hue parameter table PT1 relates hue intervals to hue interval names including a number.

FIG. 22B shows an example of a saturation parameter table PT2 according to this embodiment. As shown in FIG. 22B, the saturation parameter table PT2 relates saturation intervals to saturation interval names including a number.

FIG. 22C shows an example of a value parameter table PT3 according to this embodiment. As shown in FIG. 22C, the value parameter table PT3 relates value intervals to value interval names including a number.

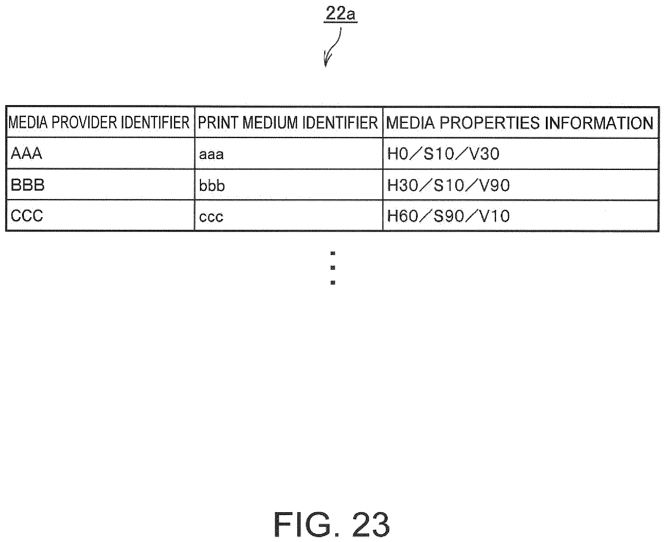

FIG. 23 shows an example of the content of a media list 22a.

The media list 22a shown for example in FIG. 23 contains media provider identifiers and print medium identifiers with media properties information including a specific combination of interval names each including a number.

The media properties information of the third embodiment has the same effect as the media properties information in the first embodiment. More particularly, by the standardizing concept of the third embodiment, the interval names are not dependent on the language of a particular country. As a result, the color characteristics of the print media can be easily understood from the media properties information using a common global expression, which is convenient for creating an industry-wide standard method of expression.

Note that the hue interval names, saturation interval names, and value interval names are not limited to the foregoing.

For example, hue interval names may be Hue1, Hue2, and so forth, or H1, H2, and so forth. Likewise, saturation interval names may be Saturation1, Saturation2, and so forth, or S1, S2, and so forth, for example. Further likewise, value interval names may be Value1, Value2, and so forth, or V1, V2, and so forth, for example.

### Embodiment 4

A fourth embodiment of the invention is described next.

Note that like elements in this fourth embodiment and the first embodiment are identified by like reference numerals, and further description thereof is omitted or simplified.

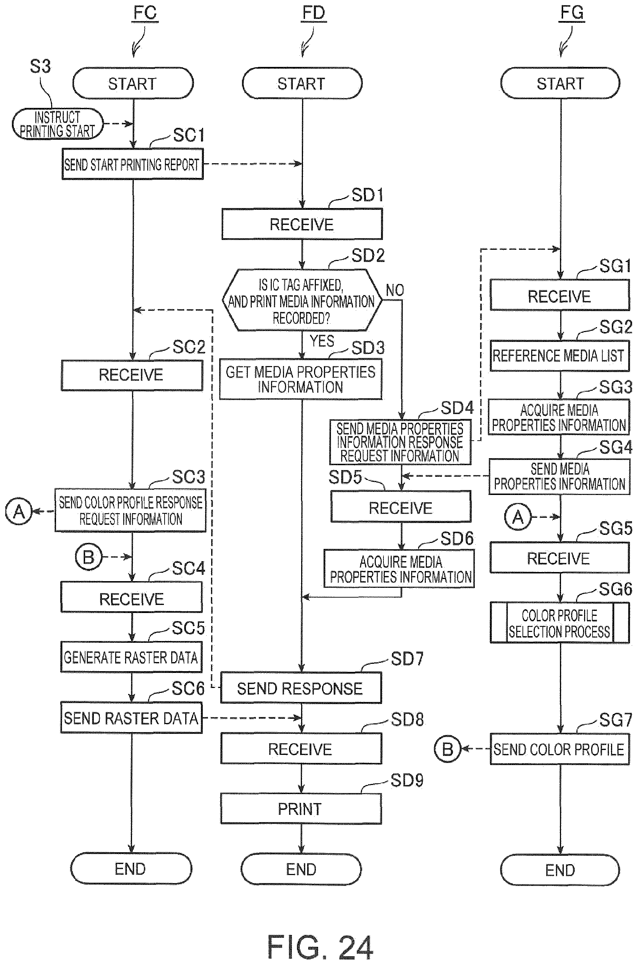

FIG. 24 is a flow chart of the operation of the image processing device 6, printer 3, and media server 8 when printing by the printer 3. Flow chart FC in FIG. 24 shows the operation of the image processing device 6, flow chart FD shows the operation of the printer 3, and flow chart FG shows the operation of the media server 8. Flow chart FC and flow chart FD are the same as those shown in FIG. 14.

In the first embodiment, the printer 3 sends media properties information response request information to the control device 5. In the fourth embodiment, the printer 3 sends media properties information response request information to the media server 8, and in response to the request, the media server 8 sends media properties information to the printer 3. Also in the first embodiment, the image processing device 6 sends color profile response request information to the control device 5. In the fourth embodiment, the image processing device 6 sends the color profile response request information to the media server 8, and in response to the request, the media server 8 sends a color profile to the image processing device 6.

The processes in FIG. 24 are described below.

As shown in flow chart FD in FIG. 24, in step SD4, the printer controller 40 of the printer 3 sends media properties information response request information to the media server 8. The address of the media server 8 and other information required to send the media properties information response request information to the media server 8 are previously registered in the printer 3.

The media provider (such as a vendor that manufactures and sells print media) may also provide (administer) the media server 8. In this case, media properties information for the print media provided by the media provider that maintains the media server 8 is registered in the media list 22a of the media server 8. In this case, in step SD4, the printer controller 40 accesses the media server 8 maintained by the media provider that supplied the print medium installed on the printer 3.

As shown in flow chart FG in FIG. 24, the server controller 20 of the media server 8 controls the server communicator 21 to receive the media properties information response request information (step SG1).

Next, the server controller 20 references the media list 22a stored by the server storage 22 (step SG2). As in the first embodiment, the media list 22a contains a record for each print medium, and each record stores a print medium identifier and media properties information.

Next, the server controller 20 executes the process described in step SE3 in the first embodiment to acquire the media properties information (step SG3).

Next, the server controller 20 sends the media properties information acquired in step SG3 to the printer 3 (step SG4).

As described above, in the fourth embodiment the media server 8 provides the media properties information in response to a request from the printer 3.

As shown in flow chart FC in FIG. 24, in step SC3, the image processing device controller 50 of the image processing device 6 sends color profile response request information to the media server 8. The address of the media server 8 and other information required to send the color profile response request information to the media server 8 are previously registered in the image processing device 6.

The entity that provides the printer 3 (such as the printer manufacturer that manufactures and sells the printer 3) may also provide the media server 8. The entity that provides the printer 3 is referred to below as the printer provider. In this case, a color profile KP for each model of printer 3 provided by the printer provider that maintains the media server 8 is registered in the color profile management database 22b of the media server 8. In this case, in step SC3, the image processing device controller 50 accesses the media server 8 maintained by the printer provider that provided the printer 3 to use for printing.

As shown in flow chart FG in FIG. 24, the server controller 20 of the media server 8 controls the server communicator 21 to receive the color profile response request information (step SG5).

Next, the server controller 20 executes the color profile selection process (step SG6). In the color profile selection process of step SG6, the server controller 20 uses the color profile management database 22b to execute the same process as the process described in flow chart FF in FIG. 15, and select a color profile. As in the first embodiment, the color profile management database 22b stores color profile set data KP for each model of printer 3.

After executing the color profile selection process, the server controller 20 sends the color profile that was selected in the process to the image processing device 6 (step SG7).

As described above, in the fourth embodiment, the media server 8 provides a color profile in response to a request from the image processing device 6.

Note that in the fourth embodiment the server controller 20 may execute the process described in the second embodiment instead of the process described in flow chart FF in FIG. 15.

The invention is described above with reference to a preferred embodiment thereof, but the invention is not limited thereto and can be modified and adapted in many ways without departing from the scope of the accompanying claims.

For example, in the four embodiments described above, the control device 5 or the media server 8 has the ability to execute the color profile selection process (ability to select a color profile; ability to correct a color profile used for reference). In this case, the control device 5 or the media server 8 functions as an information processing device.

The image processing device 6 or the printer 3 may also be configured with the ability to execute the color profile selection process. In this case, the image processing device 6 or the printer 3 functions as an information processing device.

The device that stores data equivalent to the color profile management table 32b is also not limited to the control device 5 or media server 8, and may be the image processing device 6 or printer 3.

In addition, the printer 3 is described in the foregoing embodiments as a large format printer (LFP), but the printer 3 is not limited to large format printers. The printer 3 is also described as being an inkjet printer, but the printer 3 is not limited to inkjet printers. More specifically, the printer 3 may be any device with the ability to print to print media.

The function blocks described with reference to the accompanying figures are grouped according to the main content of the processes of the functional configurations of the devices to facilitate understanding the invention. The configuration of the devices may be divided into further elements according to the process content. A single functional element may also be configured to execute more processes. The processes of the component elements may also be executed by a single hardware component, or by multiple hardware components. Yet further, the processes of the component elements may be embodied by a single program, or by multiple programs.

The processing units of the flow charts shown in the figures are divided according to the main content of the processes in order to facilitate understanding the processes of individual devices. The invention is not limited by the method of segmenting or naming the processing units. The processes of individual devices can be further divided, according to the process content, into more processing units. Alternatively, single processing units may be further divided into more processing units. Yet further, if the equivalent process can be executed, the order of the processes (steps) in the accompanying flow charts is also not limited to that shown in the figures.

The invention being thus described, it will be obvious that it may be varied in many ways. Such variations are not to be regarded as a departure from the scope of the invention, and all such modifications as would be obvious to one skilled in the art are intended to be included within the scope of the following claims.

## Claims

1. An information processing method comprising:
dividing the ranges of values that three parameters in the HSV color space, hue, saturation, and value, can take into multiple intervals;
assigning an interval name to each interval;
using a specific combination of the interval names for the three parameters as media properties information;
forming a media piece group, which is a segment of the HSV color space made up of media pieces, by dividing the HSV color space based on print medium dependency, where a media piece is a 3D portion of the HSV color space formed from the media properties information; and
using the media properties information for a print medium to identify a particular piece in the media piece group,
wherein the media properties information is information for a print medium comprising the hue interval name corresponding to the hue of the color characteristics of the print medium, the saturation interval name corresponding to the saturation of the color characteristics, and the value interval name corresponding to the value of the color characteristics, arranged in a specific order;
printing on the print medium based on the media properties information for the specific print medium;
**characterized in that** the method further comprises:
forming a printer piece group, which is a group of printer pieces which segment the HSV color space, dividing the HSV color space based on a printer dependency for each model of printer, where a printer piece is a 3D piece of the HSV color space;
storing a color profile prepared for each printer piece group, wherein each color profile reflects the tendency of the hue, saturation, and value of the printer piece in the colors of converted dots when converting pre-conversion dots to converted dots;
when printing with a particular printer on a particular print medium, identifying the appropriate printer piece in the corresponding printer piece group by identifying the location of the identified media piece in the HSV color space and identifying the printer piece at the location indicated by a vector cancelling the vector from a specific point to the location of the identified media piece; and
performing the printing step using the color profile corresponding to the identified printer piece.

2. The information processing method described in claim 1, wherein:
the interval names of the hue parameter include expressions describing the tendency of the hue in a particular interval;
the interval names of the saturation parameter include expressions describing the relative degree of saturation in a particular interval in the range of possible saturation parameter values; and
the interval names of the value parameter include expressions describing the relative degree of value in a particular interval in the range of possible value parameter values.

3. The information processing method described in claim 2, wherein:
the descriptive expressions include a word and a number.

4. The information processing method described in any one of the preceding claims, wherein:
the print medium stores the media properties information.

5. The information processing method described in any one of the preceding claims, wherein:
an information processing device (8) connected to a public telecommunication line stores the media properties information.

6. The information processing method described in any one of the preceding claims, wherein:
the size of each media piece group segmenting a desired position in the HSV color space by print medium dependency is equal to or smaller than the size of each printer piece group segmenting the desired position in the HSV color space by printer dependency.

7. The information processing method described in any one of the preceding claims, wherein:
when the HSV color space is segmented by print medium dependency or printer dependency, the length of saturation parameter intervals where the degree of saturation is low is shorter than the length of the saturation parameter intervals where the degree of saturation is high.

8. The information processing method described in any one of the preceding claims, wherein:
when the HSV color space is segmented by print medium dependency or printer dependency, the length of value parameter intervals where the degree of value is low is shorter than the length of the value parameter intervals where the degree of value is high.

9. The information processing method described in any one of the preceding claims, wherein:
when the HSV color space is segmented by print medium dependency or printer dependency, the length of the hue parameter intervals corresponding to first hues is shorter than the length of the hue interval corresponding to second hues, which are different from the first hues.

10. The information processing method described in any one of the preceding claims, wherein:
a reference color profile prepared for each printer piece group is stored; and
to print by a particular printer on a particular print medium, the reference color profile for that printer piece group is corrected by a specific method based on the media properties information of that print medium, and the corrected color profile is provided.

11. The information processing method described in claim 10, wherein:
the specific method uses the identified location of the identified media piece in the HSV color space and the identified printer piece at the location indicated by a vector cancelling the vector from a specific point to the location of the identified media piece, and corrects the reference color profile for the position corresponding to the specific point to determine the vector in the direction cancelling the vector from a specific point in the HSV color space to the specific media piece.

12. The information processing method described in any one of claims 1 or 6 to 11, wherein:
the specific point is the origin of the HSV color space.

13. An information processing device (5, 8) storing media properties information, in which
the ranges of values that three parameters in the HSV color space, hue, saturation, and value, can take are divided into multiple intervals;
an interval name is assigned to each interval; and
a specific combination of the interval names for the three parameters is used as media properties information;
the information processing device is configured to form a media piece group, which is a segment of the HSV color space made up of media pieces, formed by dividing the HSV color space based on print medium dependency, where a media piece is a 3D portion of the HSV color space formed from the media properties information; and
the media properties information for a print medium identifies a particular piece in the media piece group;
wherein the media properties information for a print medium is information comprising the hue interval name corresponding to the hue of the color characteristics of the print medium, the saturation interval name corresponding to the saturation of the color characteristics, and the value interval name corresponding to the value of the color characteristics, arranged in a specific order;
wherein the information processing device is configured to print on the print medium based on the media properties information for the specific print medium;
and **characterized in that**:
the information processing device further configured to:
form a printer piece group, which is a group of printer pieces which segment the HSV color space, dividing the HSV color space based on a printer dependency for each model of printer, where a printer piece is a 3D piece of the HSV color space;
store a color profile prepared for each printer piece, wherein each color profile reflects the tendency of the hue, saturation, and value of the printer piece in the colors of converted dots when converting pre-conversion dots to converted dots;
when printing with a particular printer on a particular print medium, identify the appropriate printer piece in the corresponding printer piece group by identifying the location of the identified media piece in the HSV color space and identifying the printer piece at the location indicated by a vector cancelling the vector from a specific point to the location of the identified media piece; and
perform the printing step using the color profile corresponding to the identified printer piece.

## Patentansprüche

1. Informationsverarbeitungsverfahren, umfassend:
Teilen der Bereiche von Werten, die drei Parameter im HSV-Farbraum, Farbton, Sättigung und Wert, einnehmen können, in mehrere Intervalle;
Zuweisen eines Intervallnamens zu jedem Intervall;
Verwenden einer bestimmten Kombination der Intervallnamen für die drei Parameter als Medieneigenschaftsinformationen;
Bilden einer Medienelementgruppe, die ein Segment des HSV-Farbraums ist, der aus Medienelementen besteht, durch Teilen des HSV-Farbraums basierend auf Druckmediumabhängigkeit, wo ein Medienelement ein 3D-Abschnitt des HSV-Farbraums ist, der aus den Medieneigenschaftsinformationen gebildet wird; und
Verwenden der Medieneigenschaftsinformationen für ein Druckmedium, um ein bestimmtes Element in der Medienelementgruppe zu identifizieren,
wobei die Medieneigenschaftsinformationen Informationen für ein Druckmedium sind, die den Farbtonintervallnamen entsprechend dem Farbton der Farbeigenschaften des Druckmediums, den Sättigungsintervallnamen entsprechend der Sättigung der Farbeigenschaften und den Wertintervallnamen entsprechend dem Wert der Farbeigenschaften umfassen, die in einer bestimmten Reihenfolge angeordnet sind;
Drucken auf dem Druckmedium basierend auf den Medieneigenschaftsinformationen für das bestimmte Druckmedium;
**dadurch gekennzeichnet, dass** das Verfahren weiter umfasst:
Bilden einer Druckerelementgruppe, die eine Gruppe von Druckerelementen ist, die den HSV-Farbraum segmentieren, wobei der HSV-Farbraum basierend auf einer Druckerabhängigkeit für jedes Modell von Drucker geteilt wird, wo ein Druckerelement ein 3D-Element des HSV-Farbraums ist;
Speichern eines Farbprofils, das für jede Druckerelementgruppe erstellt ist, wobei jedes Farbprofil die Tendenz des Farbtons, der Sättigung und des Werts des Druckerelements in den Farben umgewandelter Punkte reflektiert, wenn Vorumwandlungspunkte zu umgewandelten Punkten umgewandelt werden;
wenn mit einem bestimmten Drucker auf einem bestimmten Druckmedium gedruckt wird, Identifizieren des passenden Druckerelements in der entsprechenden Druckerelementgruppe durch Identifizieren der Stelle des identifizierten Medienelements in dem HSV-Farbraum und Identifizieren des Druckerelements an der Stelle, die durch einen Vektor angegeben ist, der den Vektor von einem bestimmten Punkt zu der Stelle des identifizierten Medienelements aufhebt; und
Durchführen des Druckschritts unter Verwendung des Farbprofils, das dem identifizierten Druckerelement entspricht.

2. Informationsverarbeitungsverfahren nach Anspruch 1, wobei:
die Intervallnamen des Farbtonparameters Ausdrücke enthalten, die die Tendenz des Farbtons in einem bestimmten Intervall beschreiben;
die Intervallnamen des Sättigungsparameters Ausdrücke enthalten, die den relativen Grad an Sättigung in einem bestimmten Intervall in dem Bereich möglicher Sättigungsparameterwerte beschreiben; und
die Intervallnamen des Wertparameters Ausdrücke enthalten, die den relativen Grad von Wert in einem bestimmten Intervall in dem Bereich möglicher Wertparameterwerte beschreiben.

3. Informationsverarbeitungsverfahren nach Anspruch 2, wobei:
die beschreibenden Ausdrücke ein Wort und eine Zahl enthalten.

4. Informationsverarbeitungsverfahren nach einem der vorstehenden Ansprüche, wobei:
das Druckmedium die Medieneigenschaftsinformationen speichert.

5. Informationsverarbeitungsverfahren nach einem der vorstehenden Ansprüche, wobei:
eine Informationsverarbeitungsvorrichtung (8), die mit einer öffentlichen Telekommunikationsleitung verbunden ist, die Medieneigenschaftsinformationen speichert.

6. Informationsverarbeitungsverfahren nach einem der vorstehenden Ansprüche, wobei:
die Größe jeder Medienelementgruppe, die eine gewünschte Position in dem HSV-Farbraum nach Druckmediumabhängigkeit segmentiert, gleich oder kleiner als die Größe jeder Druckerelementgruppe ist, die die gewünschte Position in dem HSV-Farbraum nach Druckerabhängigkeit segmentiert.

7. Informationsverarbeitungsverfahren nach einem der vorstehenden Ansprüche, wobei:
wenn der HSV-Farbraum nach Druckmediumabhängigkeit oder Druckerabhängigkeit segmentiert wird, die Länge von Sättigungsparameterintervallen, wo der Grad an Sättigung nieder ist, kürzer ist als die Länge der Sättigungsparameterintervalle, wo der Grad an Sättigung hoch ist.

8. Informationsverarbeitungsverfahren nach einem der vorstehenden Ansprüche, wobei:
wenn der HSV-Farbraum nach Druckmediumabhängigkeit oder Druckerabhängigkeit segmentiert wird, die Länge von Wertparameterintervallen, wo der Grad von Wert nieder ist, kürzer ist als die Länge der Wertparameterintervalle wo der Grad von Wert hoch ist.

9. Informationsverarbeitungsverfahren nach einem der vorstehenden Ansprüche, wobei:
wenn der HSV-Farbraum nach Druckmediumabhängigkeit oder Druckerabhängigkeit segmentiert wird, die Länge der Farbtonparameterintervalle entsprechend ersten Farbtönen kürzer ist als die Länge des Farbtonintervalls entsprechend zweiten Farbtönen, die sich von den ersten Farbtönen unterscheiden.

10. Informationsverarbeitungsverfahren nach einem der vorstehenden Ansprüche, wobei:
ein Referenzfarbprofil, das für jede Druckerelementgruppe erstellt wird, gespeichert wird; und
zum Drucken durch einen bestimmten Drucker auf einem bestimmten Druckmedium das Referenzfarbprofil für diese Druckerelementgruppe durch ein bestimmtes Verfahren basierend auf den Medieneigenschaftsinformationen dieses Druckmediums korrigiert wird und das korrigierte Farbprofil bereitgestellt wird.

11. Informationsverarbeitungsverfahren nach Anspruch 10, wobei:
das bestimmte Verfahren die identifizierte Stelle des identifizierten Medienelements in dem HSV-Farbraum und das identifizierte Druckerelement an der Stelle, die durch einen Vektor angegeben ist, der den Vektor von einem bestimmten Punkt zu der Stelle des identifizierten Medienelements aufhebt, verwendet und das Referenzfarbprofil für die Position entsprechend dem bestimmten Punkt korrigiert, um den Vektor in der Richtung zu bestimmen, der den Vektor von einem bestimmten Punkt in dem HSV-Farbraum zu dem bestimmten Medienelement aufhebt.

12. Informationsverarbeitungsverfahren nach einem der Ansprüche 1 oder 6 bis 11, wobei
der bestimmte Punkt der Ursprung des HSV-Farbraums ist.

13. Informationsverarbeitungsvorrichtung (5, 8), die Medieneigenschaftsinformationen speichert, in welcher
die Bereiche von Werten, die drei Parameter im HSV-Farbraum, Farbton, Sättigung und Wert, einnehmen können, in mehrere Intervalle geteilt sind;
jedem Intervall ein Intervallname zugewiesen ist; und eine bestimmte Kombination der Intervallnamen für die drei Parameter als Medieneigenschaftsinformationen verwendet wird;
die Informationsverarbeitungsvorrichtung konfiguriert ist, eine Medienelementgruppe zu bilden, die ein Segment des HSV-Farbraums ist, der aus Medienelementen besteht, gebildet durch Teilen des HSV-Farbraums basierend auf Druckmediumabhängigkeit, wo ein Medienelement ein 3D-Abschnitt des HSV-Farbraums ist, der aus den Medieneigenschaftsinformationen gebildet wird; und
die Medieneigenschaftsinformationen für ein Druckmedium ein bestimmtes Element in der Medienelementgruppe identifizieren,
wobei die Medieneigenschaftsinformationen für ein Druckmedium Informationen sind, die den Farbtonintervallnamen entsprechend dem Farbton der Farbeigenschaften des Druckmediums, den Sättigungsintervallnamen entsprechend der Sättigung der Farbeigenschaften und den Wertintervallnamen entsprechend dem Wert der Farbeigenschaften umfassen, die in einer bestimmten Reihenfolge angeordnet sind;
wobei die Informationsverarbeitungsvorrichtung konfiguriert ist, auf dem Druckmedium basierend auf den Medieneigenschaftsinformationen für das bestimmte Druckmedium zu drucken;
und **dadurch gekennzeichnet, dass**:
die Informationsverarbeitungsvorrichtung weiter konfiguriert ist zum:
Bilden einer Druckerelementgruppe, die eine Gruppe von Druckerelementen ist, die den HSV-Farbraum segmentieren, wobei der HSV-Farbraum basierend auf einer Druckerabhängigkeit für jedes Modell von Drucker geteilt wird, wo ein Druckerelement ein 3D-Element des HSV-Farbraums ist;
Speichern eines Farbprofils, das für jedes Druckerelement erstellt ist, wobei jedes Farbprofil die Tendenz des Farbtons, der Sättigung und des Werts des Druckerelements in den Farben umgewandelter Punkte reflektiert, wenn Vorumwandlungspunkte zu umgewandelten Punkten umgewandelt werden;
wenn mit einem bestimmten Drucker auf einem bestimmten Druckmedium gedruckt wird, Identifizieren des passenden Druckerelements in der entsprechenden Druckerelementgruppe durch Identifizieren der Stelle des identifizierten Medienelements in dem HSV-Farbraum und Identifizieren des Druckerelements an der Stelle, die durch einen Vektor angegeben ist, der den Vektor von einem bestimmten Punkt zu der Stelle des identifizierten Medienelements aufhebt; und
Durchführen des Druckschritts unter Verwendung des Farbprofils, das dem identifizierten Druckerelement entspricht.

## Revendications

1. Procédé de traitement d'informations comprenant :
la division de plages de valeurs que trois paramètres dans l'espace chromatique HSV, teinte, saturation et valeur peuvent adopter, en de multiples intervalles,
l'attribution d'un nom d'intervalle à chaque intervalle ;
l'utilisation d'une combinaison spécifique de noms d'intervalle pour les trois paramètres en tant qu'information de propriétés de média ;
la formation d'un groupe d'éléments média, lequel est un segment de l'espace chromatique HSV constitué d'éléments média, en divisant l'espace chromatique HSV sur la base d'une dépendance du support d'impression, où un élément média est une partie 3D de l'espace chromatique HSV formée par l'information de propriétés de média ; et
l'utilisation de l'information de propriétés de média pour un support d'impression pour identifier un élément particulier dans le groupe d'éléments média,
dans lequel l'information de propriétés média est de l'information pour un support d'impression comprenant le nom d'intervalle de teinte correspondant à la teinte des caractéristiques de couleur du support d'impression, le nom d'intervalle de saturation correspondant à la saturation des caractéristiques de couleur, et le nom d'intervalle de valeur correspondant à la valeur des caractéristiques de couleur, agencés dans un ordre spécifique ;
l'impression sur le support d'impression sur la base de l'information de propriétés de média pour le support d'impression spécifique ;
**caractérisé en ce que** le procédé comprend en outre :
la formation d'un groupe d'éléments d'imprimante, lequel est un groupe d'éléments d'imprimante qui segmentent l'espace chromatique HSV, divisant l'espace chromatique HSV sur la base d'une dépendance de l'imprimante pour chaque modèle d'imprimante, où un élément d'imprimante est un élément 3D de l'espace chromatique HSV ;
le stockage d'un profil de couleur préparé pour chaque groupe d'éléments d'imprimante, chaque profil de couleur reflétant la tendance de la teinte, de la saturation, et de la valeur de l'élément d'imprimante dans les couleurs de points convertis lors de la conversion de points de pré-conversion en points convertis ;
lors de l'impression avec une imprimante particulière sur un support d'impression particulier, l'identification de l'élément d'imprimante approprié dans le groupe d'éléments d'imprimante correspondant en identifiant l'emplacement des éléments média identifiés dans l'espace chromatique HSV et en identifiant l'élément d'imprimante à l'emplacement indiqué grâce à un vecteur annulant le vecteur d'un point spécifique jusqu'à l'emplacement de l'élément média identifié ; et
la réalisation de l'étape d'impression en utilisant le profil de couleur correspondant à l'élément d'imprimante identifié.

2. Procédé de traitement d'informations décrit par la revendication 1, dans lequel :
les noms d'intervalle du paramètre de teinte comprennent des expressions décrivant la tendance de la teinte dans un intervalle particulier ;
les noms d'intervalle du paramètre de saturation comprennent des expressions décrivant le degré relatif de saturation dans un intervalle particulier dans la plage de valeurs de paramètres de saturation possibles ; et
les noms d'intervalle du paramètre de valeur comprennent des expressions décrivant le degré relatif de la valeur dans un intervalle particulier dans la plage de valeurs de paramètres de valeur possibles.

3. Procédé de traitement d'informations décrit par la revendication 2, dans lequel :
les expressions descriptives comprennent un mot et un nombre.

4. Procédé de traitement d'informations décrit par l'une quelconque des revendications précédentes, dans lequel :
le support d'impression stocke l'information de propriétés de média.

5. Procédé de traitement d'informations décrit par l'une quelconque des revendications précédentes, dans lequel :
un dispositif de traitement d'informations (8) connecté à une ligne de télécommunication publique stocke l'information de propriétés de média.

6. Procédé de traitement d'informations décrit par l'une quelconque des revendications précédentes, dans lequel :
la taille de chaque groupe d'éléments média segmentant une position souhaitée dans l'espace chromatique HSV grâce à la dépendance du support d'impression est inférieure ou égale à la taille de chaque groupe d'éléments d'imprimante segmentant la position souhaitée dans l'espace chromatique HSV grâce à la dépendance de l'imprimante.

7. Procédé de traitement d'informations décrit par l'une quelconque des revendications précédentes, dans lequel :
lorsque l'espace chromatique HSV est segmenté grâce à une dépendance du support d'impression ou une dépendance de l'imprimante, la longueur d'intervalles de paramètres de saturation où le degré de saturation est faible est inférieure à la longueur des intervalles de paramètres de saturation où le degré de saturation est élevé.

8. Procédé de traitement d'informations décrit par l'une quelconque des revendications précédentes, dans lequel :
lorsque l'espace chromatique HSV est segmenté grâce à une dépendance du support d'impression ou une dépendance de l'imprimante, la longueur d'intervalles de paramètres de valeur où le degré de valeur est faible est inférieure à la longueur des intervalles de paramètres de valeur où le degré de valeur est élevé.

9. Procédé de traitement d'informations décrit par l'une quelconque des revendications précédentes, dans lequel :
lorsque l'espace chromatique HSV est segmenté grâce à une dépendance du support d'impression ou une dépendance de l'imprimante, la longueur des intervalles de paramètres de teinte correspondant à des premières teintes est inférieure à la longueur de l'intervalle de teinte correspondant à des deuxièmes teintes, lesquelles sont différentes des premières teintes.

10. Procédé de traitement d'informations décrit par l'une quelconque des revendications précédentes, dans lequel :
un profil de couleur de référence préparé pour chaque groupe d'éléments d'imprimante est stocké ; et
pour imprimer grâce à une imprimante particulière sur un support d'impression particulier, le profil de couleur de référence pour ce groupe d'éléments d'imprimante est corrigé grâce à une méthode spécifique basée sur l'information de propriétés de média de ce support d'impression, et le profil de couleur corrigé est fourni.

11. Procédé de traitement d'informations décrit par la revendication 10, dans lequel :
la méthode spécifique utilise l'emplacement identifié de l'élément média identifié dans l'espace chromatique HSV et l'élément d'imprimante identifié à l'emplacement indiqué grâce à un vecteur annulant le vecteur d'un point spécifique jusqu'à l'emplacement de l'élément média identifié, et corrige le profil de couleur de référence pour la position correspondant au point spécifique pour déterminer le vecteur dans la direction annulant le vecteur d'un point spécifique dans l'espace chromatique HSV jusqu'à l'élément média spécifique.

12. Procédé de traitement d'informations décrit par l'une quelconque des revendications 1 ou 6 à 11, dans lequel :
le point spécifique est l'origine de l'espace chromatique HSV.

13. Dispositif de traitement d'informations (5, 8) stockant de l'information de propriétés de média, où
les plages de valeurs que trois paramètres dans l'espace chromatique HSV, teinte, saturation et valeur peuvent adopter, sont divisées en de multiples intervalles ;
un nom d'intervalle est attribué à chaque intervalle ; et
une combinaison spécifique de noms d'intervalle pour les trois paramètres est utilisée en tant qu'information de propriétés de média ;
le dispositif de traitement d'informations est configuré pour former un groupe d'éléments média, lequel est un segment de l'espace chromatique HSV constitué d'éléments média, formé en divisant l'espace chromatique HSV sur la base d'une dépendance du support d'impression, où un élément média est une partie 3D de l'espace chromatique HSV formée à partir de l'information de propriétés de média ; et
l'information de propriétés de média pour un support d'impression identifie un élément particulier dans le groupe d'éléments média ;
dans lequel l'information de propriétés de média pour un support d'impression est de l'information comprenant le nom d'intervalle de teinte correspondant à la teinte des caractéristiques de couleur du support d'impression, le nom d'intervalle de saturation correspondant à la saturation des caractéristiques de couleur, et le nom d'intervalle de valeur correspondant à la valeur des caractéristiques de couleur, agencés dans un ordre spécifique ;
dans lequel le dispositif de traitement d'informations est configuré pour imprimer sur le support d'impression sur la base de l'information de propriétés de média pour le support d'impression spécifique ;
et **caractérisé en ce que** :
le dispositif de traitement d'informations est en outre configuré pour :
former un groupe d'éléments d'imprimante, qui est un groupe d'éléments d'imprimante qui segmentent l'espace chromatique HSV, divisant l'espace chromatique HSV sur la base d'une dépendance de l'imprimante pour chaque modèle d'imprimante, où un élément d'imprimante est un élément 3D de l'espace chromatique HSV ;
stocker un profil de couleur préparé pour chaque élément d'imprimante, dans lequel chaque profil de couleur reflète la tendance de la teinte, de la saturation et d'une valeur de l'élément d'imprimante dans les couleurs de points convertis lors de la conversion de points pré-convertis en points convertis ;
lors de l'impression avec une imprimante particulière sur un support d'impression particulier, identifier l'élément d'imprimante approprié dans le groupe correspondant d'éléments d'imprimante en identifiant l'emplacement de l'élément média identifié dans l'espace chromatique HSV et en identifiant l'élément d'imprimante à l'emplacement indiqué par un vecteur annulant le vecteur d'un point spécifique jusqu'à l'emplacement de l'élément média identifié ; et
réaliser l'étape d'impression en utilisant le profil de couleur correspondant à l'élément d'imprimante identifié.
